(19) Europäisches Patentamt
European Patent Office
Office européen des brevets

(11) EP 3 672 024 A1

(12) DEMANDE DE BREVET EUROPEEN

(43) Date de publication:
24.06.2020 Bulletin 2020/26

(51) Int Cl.:
*H02J 9/06* (2006.01)          *H02J 7/00* (2006.01)
*H02J 7/14* (2006.01)          *H02J 7/34* (2006.01)

(21) Numéro de dépôt: 19217597.4

(22) Date de dépôt: 18.12.2019

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
KH MA MD TN

(30) Priorité: 20.12.2018 FR 1873524

(71) Demandeur: ORANGE
75015 Paris (FR)

(72) Inventeurs:
• MARQUET, Didier
92326 Chatillon Cedex (FR)
• FRANCOISE, Brian
92326 Chatillon Cedex (FR)

(74) Mandataire: Cabinet Beau de Loménie
158, rue de l'Université
75340 Paris Cedex 07 (FR)

(54) **PROCÉDÉ ET DISPOSITIF DE COMMANDE DE RECHARGE ET DE DÉCHARGE DE BATTERIES D'UN ENSEMBLE DESDITES BATTERIES**

(57) Chacune des batteries de l'ensemble est reliée à un circuit électrique reliant une source d'alimentation à un dispositif consommateur pour former un circuit électrique commandable dit de recharge, reliant la batterie à la source d'alimentation, et un circuit électrique commandable dit de décharge, reliant la batterie au un dispositif consommateur. Le procédé comprend au moins:
- une recharge d'une dite première batterie de l'ensemble, simultanée avec une mise au repos d'au moins une autre batterie de l'ensemble, la recharge de la première batterie étant suivie par une mise au repos de cette première batterie; ou
- une décharge d'une dite première batterie de l'ensemble, simultanée avec une mise au repos d'au moins une autre batterie de l'ensemble, la décharge de la première batterie étant suivie par une mise au repos de cette première batterie,
- une recharge de n'importe laquelle des batteries consiste à commander une fermeture de son circuit de recharge pour la recharger par la source d'alimentation ;
- une décharge de n'importe laquelle des batteries consiste à commander une ouverture de son circuit de recharge et une fermeture de son circuit de décharge pour la décharger et alimenter le dispositif consommateur;
- une mise au repos de n'importe laquelle des batteries consiste à commander une ouverture de ses circuits de recharge et de décharge ;
le dispositif consommateur étant alimenté soit par la source d'alimentation, soit par la décharge d'une batterie.

[Fig. 13]

EP 3 672 024 A1

**Description**

Technique antérieure

L'invention se rapporte au domaine général de batteries d'accumulateurs électriques rechargeables. Elle concerne plus particulièrement l'alimentation électrique de dispositifs électroniques situés dans des zones sans réseau électrique fiable, en d'autre mots, sans réseau électrique qui respecte des exigences strictes en termes de disponibilité et de stabilité de courant, de tension et/ou de puissance fournie.

Pour alimenter des dispositifs électroniques consommateurs dans des zones non couvertes par des réseaux électriques, une première solution consiste à utiliser des groupes électrogènes, par exemple des moteurs Diesel produisant de l'énergie électrique.

Cependant, les groupes électrogènes sont en général surdimensionnés par rapport à la puissance d'utilisation des dispositifs consommateurs qu'ils alimentent, ce qui conduit à un rendement assez faible et à une usure prématurée du groupe électrogène. A titre d'exemple, les puissances d'utilisation requises pour alimenter un équipement de télécommunications et un équipement de conditionnement d'air sont chacune de l'ordre de 1 à 4 kW. Dans ce cas, le taux moyen de charge d'un groupe électrogène qui alimente ces deux équipements est seulement compris entre 10 et 50%.

Une deuxième solution consiste à associer une batterie à un groupe électrogène pour former un système hybride d'alimentation HGB (pour « Hybrid Genset Battery » en anglais). Deux phases sont alternées : pendant une première phase, le groupe électrogène alimente les dispositifs consommateurs et charge aussi la batterie, puis pendant une deuxième phase, le groupe électrogène est mis en arrêt et la batterie se décharge pour alimenter les dispositifs consommateurs. La première et la deuxième phase peuvent durer chacune quelques heures. Cette solution permet d'allonger la durée de vie du groupe électrogène en réduisant son temps de fonctionnement, le coût de sa maintenance et en le faisant fonctionner à plus haut taux de charge (puisqu'il alimente la batterie en plus des dispositifs consommateurs), idéalement à 75% pour obtenir une plus faible consommation de combustible.

Dans le cas de disponibilité d'un réseau électrique non fiable, par exemple à disponibilité réduite de quelques heures par jour, une troisième solution pour alimenter des dispositifs électroniques consommateurs consiste à associer une batterie au réseau électrique non fiable : la batterie se charge et est maintenue chargée tant que le réseau électrique est disponible en même temps que les dispositifs consommateurs sont alimentés par ce réseau électrique, et lorsque le réseau électrique n'est plus disponible, la batterie se décharge pour alimenter les dispositifs consommateurs en autonomie de plusieurs heures.

La deuxième et la troisième solution, se basant toutes les deux sur l'utilisation d'une batterie en alternance avec une autre source d'alimentation, présentent des inconvénients liés à la durée de vie des batteries, à leurs coûts et/ou à des contraintes d'utilisation de ces batteries.

En ce qui concerne les batteries actuellement disponibles et leurs utilisations :

- les batteries les plus utilisées sont au Plomb-acide. Leur durée de vie en cycles de charge et de décharge est limitée en particulier à haute température ambiante telle qu'une température supérieure à 30°C. En Afrique par exemple, la durée de vie d'une batterie au Plomb rechargeable qui fait jusqu'à une dizaine de cycles de charge/décharge par semaine à 50 % de sa capacité n'est souvent que de 2 à 4 ans. Cependant, une batterie au Plomb peut comporter plusieurs branches mises en parallèle à des états de charge différents, ce qui permet de remplacer une branche défectueuse par une autre sans risque de coupure du système.

- des informations de constructeurs et des tests sur des batteries Lithium montrent que leur durée de vie peut atteindre de 6 à 7 ans en cycle profond i.e. en cycle de charge et décharge dans lequel la décharge est continue jusqu'à ce que la batterie atteigne sa coupure de tension basse, habituellement définie pour 70 à 90 % de décharge. Cependant les batteries Lithium ont un coût initial 3 à 4 fois supérieur à celui des batteries au Plomb et sont donc encore peu utilisées (quelques pourcents du marché). De plus, la mise en parallèle des batteries Lithium est assez complexe si ces batteries ne sont pas dans un même état de charge, i.e. à une même tension.

- les batteries dites chaudes comme les batteries Sodium fondu ou les batteries Chlorure de Nickel ont un bon rendement électrochimique, mais leur rendement global avec un maintien en température à environ 300°C est de l'ordre de 50 à 75%. De plus, en cas de défaillance au niveau de l'autre source d'alimentation (le groupe électrogène ou le réseau électrique non fiable), il faut que le temps d'intervention ne dépasse pas le temps de refroidissement de la batterie chaude, car une batterie refroidie peut demander jusqu'à plusieurs jours pour remonter lentement en température afin de ne pas briser la céramique interne de la batterie. Les batteries chaudes ne sont donc utilisées qu'avec d'autres sources d'alimentation fiables et dans des zones rapidement accessibles pour la maintenance.

les batteries REDOX ou « à flux » telles que les batteries à flux de sels de vanadium oxydo-réducteur ont l'avantage de pouvoir ajouter de la capacité en augmentant la taille d'un réservoir externe de liquide. Mais ces batteries ont un rendement modeste en utilisation permanente à cause de fuites électriques entre des éléments en série via les fluides salins conducteurs utilisés et elles demandent beaucoup d'entretien. Par exemple, la batterie REDOX Zinc-Brome, doit être arrêtée une fois par semaine pour sa régénération et son nettoyage automatique interne. De plus, il n'a pas été proposé de fonctionnement en alternance des batteries REDOX avec une autre source d'alimentation.

De ce fait, même la deuxième et la troisième solutions décrites précédemment, qui utilisent une batterie associée à une autre source d'alimentation, ne sont pas satisfaisantes.

Il existe un besoin en une solution permettant d'alimenter des dispositifs électroniques consommateurs dans une zone ne disposant pas d'un réseau électrique fiable, et qui ne présente pas certains des inconvénients de l'état de la technique.

Exposé de l'invention

L'invention vise un procédé de commande de charge et de décharge de batteries d'un ensemble desdites batteries, chacune de ces batteries étant reliée à un circuit électrique reliant une source d'alimentation à un dispositif consommateur pour former :

- un circuit électrique commandable, dit de recharge, reliant la batterie à la source d'alimentation; et
- un circuit électrique commandable, dit de décharge, reliant la batterie au dispositif consommateur et réalisant une fonction diode pour éviter un courant de circulation entre les batteries, ledit procédé comprenant au moins:
- une recharge d'une dite première batterie de l'ensemble, simultanée avec une mise au repos d'au moins une autre batterie de l'ensemble, dite deuxième batterie, la recharge de la première batterie étant suivie par une dite mise au repos de la première batterie; ou
- une décharge d'une dite première batterie de l'ensemble, simultanée avec une mise au repos d'au moins une autre batterie de l'ensemble, dite deuxième batterie, la décharge de la première batterie étant suivie par une dite mise au repos de la première batterie,

    dans ledit procédé :

    - une dite recharge de n'importe laquelle des batteries consiste à commander une fermeture du circuit électrique de recharge correspondant à cette batterie pour la recharge de la batterie par la source d'alimentation ;
    - une dite décharge de n'importe laquelle des batteries consiste à commander une ouverture du circuit électrique de recharge et à commander une fermeture du circuit électrique de décharge correspondants à cette batterie pour la décharge de la batterie pour alimenter le dispositif consommateur ;
- une dite mise au repos de n'importe laquelle des batteries consiste à commander une ouverture des circuits électriques de recharge et de décharge correspondants à cette batterie pour sa mise au repos;

    le dispositif consommateur étant alimenté soit par la source d'alimentation, soit par la décharge d'une batterie.

Corrélativement, l'invention vise un dispositif de commande de charge et de décharge de batteries d'un ensemble desdites batteries, chacune de ces batteries étant destinée à être reliée à un circuit électrique reliant une source d'alimentation à un dispositif consommateur pour former un circuit électrique commandable, dit de recharge, reliant la batterie à la source d'alimentation et un circuit électrique commandable, dit de décharge, reliant la batterie au dispositif consommateur et réalisant une fonction diode pour éviter un courant de circulation entre les batteries, le dispositif de commande comporte un module de couplage configuré pour générer au moins:

- une commande de recharge d'une dite première batterie de l'ensemble, simultanée avec une mise au repos d'au moins une autre batterie de l'ensemble, dite deuxième batterie, la recharge de la première batterie étant suivie par une mise au repos de la première batterie; ou
- une commande de décharge d'une dite première batterie de l'ensemble, simultanée avec une mise au repos d'au moins une autre batterie de l'ensemble, dite deuxième batterie, la décharge de la première batterie étant suivie par une mise au repos de la première batterie;

    ledit module de couplage étant configurer pour générer les commandes de recharge et les commandes de décharge pour que le dispositif consommateur soit alimenté soit par la source d'alimentation, soit par la décharge d'une dite batterie,
- une dite recharge de n'importe laquelle des batteries consiste à commander une fermeture du circuit électrique de recharge correspondant à cette batterie pour la recharge de la batterie par la source d'alimentation ;
- une dite décharge de n'importe laquelle des batteries consiste à commander une ouverture du circuit électrique de recharge et à commander une fermeture du circuit électrique de décharge correspondants à cette batterie pour la décharge de la batterie pour alimenter le dispositif consommateur ;
- une dite mise au repos de n'importe laquelle des batteries consiste à commander une ouverture des circuits électriques de recharge et de décharge correspondants à cette batterie pour sa mise au repos.

Ainsi, selon l'invention le dispositif consommateur est alimenté sans coupure, autrement dit en continu, soit par la source d'alimentation, soit par la décharge d'une batterie.

Les caractéristiques et avantages du procédé de commande selon l'invention présentés ci-après s'appliquent de la même façon au dispositif de commande selon l'invention, et vice versa.

Conformément à l'invention, on dit qu'une recharge et une mise au repos, ou une décharge et une mise au repos sont simultanées ou effectuées simultanément si elles commencent au même moment et se terminent au même moment.

L'invention permet ainsi d'alimenter le dispositif consommateur d'une façon continue (i.e. sans coupure) soit par la source d'alimentation soit par au moins une des batteries parmi l'ensemble de batteries. La mise au repos des batteries est introduite sans réduire l'alimentation du dispositif consommateur.

Au sens de l'invention, la mise au repos d'une batterie est sa déconnexion de toute source d'alimentation et de tout dispositif consommateur. Durant cette phase, un niveau de charge de la batterie reste constant.

Au sens de l'invention, la recharge d'une batterie est une phase durant laquelle la batterie est alimentée électriquement par la source d'alimentation et emmagasine de l'énergie électrique. Durant cette phase, le niveau de charge de la batterie augmente.

Si le circuit électrique de décharge d'une batterie est fermé, ce circuit de décharge sera court-circuité pendant une recharge de cette batterie.

Dans un mode de réalisation, la recharge d'une batterie comporte en outre une ouverture dudit circuit électrique de décharge de cette batterie.

Au sens de l'invention, la décharge d'une batterie est une phase durant laquelle la batterie restitue de l'énergie électrique, pour alimenter le dispositif consommateur. Durant cette phase, le niveau de charge de la batterie décroît.

Les circuits de recharge et de décharge d'une batterie peuvent être commandés indépendamment l'un de l'autre.

Les valeurs nominales de capacité et de tension d'une batterie sont celles définies par le constructeur de la batterie conformément à une norme.

Au sens de l'invention, un cycle d'une batterie comporte au moins une recharge et une décharge de cette batterie.

Au sens de l'invention, chaque batterie de l'ensemble peut être reliée à une ou plusieurs sources d'alimentation et à un ou plusieurs dispositifs consommateurs.

Au sens de l'invention, une batterie peut comporter une seule branche ou plusieurs branches de même tension fonctionnant en parallèle et faites de blocs. Par exemple, une batterie peut comporter deux branches en parallèle de 48V, chaque branche comportant quatre blocs de 12V chacun.

L'invention permet en particulier d'allonger la durée de vie des batteries grâce au temps de repos qui sépare les phases de recharge et de décharge et/ou vice versa. En effet, les batteries de l'ensemble sont rechargées ou déchargées en alternance.

Des tests expérimentaux ont pu mettre en évidence une réduction du vieillissement en termes de perte de capacité par cycles grâce à la mise au repos entre les phases de recharge et de décharge des accumulateurs au Lithium et ceci même en les faisant travailler à 100% de leur capacité nominale.

Par exemple, à une température entre 35 et 45 °C et sur 1000 cycles de recharge et décharge, la mise au repos d'une batterie entre 15 et 30 minutes entre les phases de recharge et de décharge et vice versa permet de réduire la pente de vieillissement d'une dizaine de pourcentages à quelques pourcentages. Dans ces conditions, la durée de vie de la batterie peut atteindre plus de 10 ans. L'utilisation des batteries Lithium peut être alors privilégiée par rapport aux batteries en Plomb vu que sur une telle longue durée de vie, il y aura un retour sur l'investissement du coût initial.

Les batteries de l'ensemble peuvent avoir des capacités nominales différentes ou une même capacité nominale.

La mise au repos d'une batterie peut permettre de réduire la température de la batterie, ce qui améliore sa durée de vie, mais aussi réduit le besoin de mettre en marche un équipement de refroidissement de la batterie, tel qu'un climatiseur. L'invention permet donc de réduire la consommation énergétique.

Dans un mode préféré, au moins une batterie dudit ensemble est de type Lithium. Comme mentionné précédemment, la batterie Lithium offre des cycles profonds, travaille entre 80 et 100 % de capacité nominale, et a une plus longue durée de vie que les autres types de batteries. De plus, l'allongement de la durée de vie de la batterie Lithium grâce à la solution proposée par la présente invention permet d'avoir un retour sur l'investissement sur le coût initial de la batterie Lithium.

Dans un mode préféré, au moins une batterie dudit ensemble est de type Lithium ou Nickel (par exemple NiCd, NiZn ou NiMH) acceptant suffisamment de puissance en recharge et en décharge pour qu'une seule batterie dudit ensemble puisse d'une part, fournir l'ensemble de la puissance demandée par le dispositif consommateur et d'autre part, accepter la puissance maximale de la source d'alimentation.

La capacité de l'ensemble de batteries selon l'invention peut être égale à la capacité d'une seule batterie conformément à une solution d'alimentation de l'art antérieur. Le fait d'avoir un ensemble d'au moins deux batteries ne résulte pas à une augmentation du coût des batteries par rapport aux solutions de l'art antérieur.

Dans un mode de réalisation, la mise au repos n'est pas ajoutée systématiquement après chaque recharge et après chaque décharge. Il est possible de mettre une batterie au repos après chaque recharge de cette batterie par exemple, ou après chaque décharge, ou après un nombre donné de cycles. Le gain en termes de durée de vie d'une batterie diminue lorsque ce nombre de cycles augmente.

Dans un mode de réalisation, le procédé de commande comprend en outre, pour au moins une batterie de l'ensemble, une séquence cyclique comportant :

- au moins une recharge suivie d'une mise au repos ; et
- au moins une décharge suivie d'une mise au repos.

L'invention permet donc d'allonger la durée de vie de cette batterie.

Dans un mode de réalisation, le procédé de commande comprend en outre, de manière alternée entre au moins deux batteries de l'ensemble, une séquence comportant :

- au moins une recharge suivie d'une mise au repos ; et
- au moins une décharge suivie d'une mise au repos ; les durées des recharge, décharge et mises au repos de cette séquence pouvant être différentes pour chacune des batteries.

L'invention permet donc d'alimenter le dispositif consommateur par l'une des batteries en décharge tout en allongeant la durée de vie de chacune des batteries alternées.

Dans un mode de réalisation de l'invention, le procédé de commande comprend en outre une étape de surveillance d'une information représentative d'un état d'activité de la source d'alimentation. Tant que l'état de la source d'alimentation est actif, la recharge de la première batterie est mise en œuvre jusqu'à un niveau de charge déterminé, le dispositif consommateur étant alimenté par la source d'alimentation. Tant que l'état de la source d'alimentation est inactif, la décharge de la première batterie est mise en œuvre jusqu'à un niveau de charge déterminé.

Dans un mode de réalisation, le procédé de commande conforme à l'invention comporte en outre une étape d'obtention d'au moins une information représentative d'un niveau de charge d'une batterie de l'ensemble pour déterminer la batterie en recharge ou en décharge.

La détermination de la batterie à laquelle une recharge ou une décharge est appliquée, est basée alors sur des informations précises sur le niveau de charge de chaque batterie, ce qui réduit les risques de sélectionner pour la décharge une batterie qui n'est pas assez chargée pour pouvoir alimenter le dispositif consommateur ou de sélectionner pour la recharge une batterie ayant déjà un niveau de charge élevé alors qu'il existe une autre batterie en besoin plus important de recharge.

L'information représentative d'un niveau de charge d'une batterie peut être obtenue par exemple par des mesures physiques, ou par des estimations telles que des calculs faits par des algorithmes d'apprentissage machine.

Dans un autre mode, déterminer une batterie à laquelle une recharge ou une décharge est appliquée, se fait d'une façon systématique en alternance entre les différentes batteries de l'ensemble en se basant sur un chronomètre par exemple, ou sur une période de disponibilité de la source d'alimentation.

Selon l'invention, le circuit de décharge de chacune des batteries réalise une fonction diode pour éviter un courant de circulation entre les batteries. On rappelle qu'un tel courant de circulation inter-batteries peut se produire lorsque les batteries ne sont pas à un même niveau de charge, et lorsque le circuit de recharge ou le circuit de décharge d'une première batterie est fermé simultanément avec la fermeture du circuit de décharge d'une deuxième batterie. On peut noter que ce courant de circulation inter-batteries peut être beaucoup plus élevé que le courant de décharge des batteries, et peut donc les détruire.

Par exemple, considérons un accumulateur à plaque fine au Plomb pur de 100 Ah (Ampère-heure) chargé à 2,1 V de force électromotrice, et ayant une résistance interne de 5 mOhms. Lorsque cet accumulateur se décharge de plus de la moitié de sa capacité en décharge, pendant un régime de 3 heures (3h) en délivrant un courant de l'ordre de 33 Ampères (A), il aura après décharge une tension de 1,9V, et sa résistance interne aura augmenté de quelques mOhms, par exemple de 8 mOhms. Considérons deux batteries de 48 V nominal comprenant chacune 24 accumulateurs précédents en série. Si ces deux batteries sont connectées en parallèle, le courant de circulation inter-batteries pourrait atteindre 24xdifférenceDeTension/RésistanceInterne=24*(2,1-1,9 V)/(5 + 8 mOhms), soit 369 Ampères. Un tel courant inter-batteries serait 10 fois plus élevé que le courant de décharge et de charge (33A) observé en régime 3h. Cet exemple représente un cas d'usage courant pour les systèmes hybrides de type HGB.

Grâce à la fonction diode, l'invention permet d'éviter un tel courant de circulation entre les batteries. Elle protège ainsi les batteries et allonge leur durée de vie.

Dans un mode de réalisation, le procédé de commande conforme à l'invention comporte en outre une étape de contrôle de la source d'alimentation pour la mettre dans l'état actif ou dans l'état inactif. Conformément à ce mode, l'information représentative de l'état d'activité de la source d'alimentation est fournie par cette étape de contrôle de la source.

La source d'alimentation n'est donc mise en marche qu'en cas de besoin de recharger une batterie. Ce mode permet donc de réduire la consommation d'énergie, notamment la consommation des combustibles lorsque la source d'alimentation est un groupe électrogène. De plus, ce mode permet de contrôler le rendement de la source d'alimentation, de réduire son temps de mise en marche et les risques d'usure prématurée et donc d'allonger la durée de vie de la source d'alimentation.

Dans un mode de réalisation, une durée d'activité et une durée d'inactivité de la source d'alimentation sont déterminées au préalable; autrement dit, ces durées sont prédéfinies. Par exemple, les durées d'activité et d'inactivité peuvent être déterminées à des valeurs constantes. L'étape de contrôle peut consister à activer ou désactiver la source d'alimentation d'une façon alternée et suivant les durées de l'activité et de l'inactivité. Ce mode permet d'avoir une commande simple et périodique.

Dans un autre mode de réalisation, la durée d'activité et la durée d'inactivité de la source d'alimentation sont déterminées en fonction de l'au moins une information représentative du niveau de charge d'une batterie.

Ce mode de réalisation permet d'optimiser les gains en termes de durées de vie des batteries et de la source d'alimentation car il se base sur des informations de niveaux de charge des batteries. Ce mode permet aussi de garantir la disponibilité d'alimentation pour le dispositif consommateur.

Dans un mode de réalisation de l'invention, le dispositif de commande comporte :

- un module de surveillance configuré pour surveiller une information représentative d'un état d'activité de la source d'alimentation ;
- le module de couplage étant configuré pour :

    -- tant que l'état de la source d'alimentation est actif, commander les circuits électriques de recharge et de décharge correspondants à la première batterie et les circuits électriques correspondants à la deuxième batterie pour la recharge de la première batterie jusqu'à un niveau de charge déterminé, (en fonctionnement, le dispositif consommateur est ainsi alimenté avec la source d'alimentation); et
    -- tant que l'état de la source d'alimentation est inactif, commander les circuits électriques de recharge et de décharge correspondants à la première batterie et les circuits électriques correspondants à la deuxième batterie pour la décharge de la première batterie jusqu'à un niveau de charge déterminé.

Dans un mode de réalisation, le dispositif de commande conforme à l'invention comporte en outre un module de communication configuré pour obtenir au moins une information représentative d'un niveau de charge d'une batterie, pour déterminer une batterie à recharger ou à décharger.

Dans un mode de réalisation, le dispositif de commande conforme à l'invention comporte en outre un module de contrôle configuré pour contrôler l'état d'activité de la source d'alimentation, le module de surveillance étant configuré pour obtenir, du module de contrôle, l'information représentative de l'état d'activité de la source d'alimentation.

Dans un mode de réalisation, les circuits électriques de recharge et de décharge correspondants à une batterie de l'ensemble sont compris dans le dispositif de commande, ou dans un même boitier physique que le dispositif de commande. Dans un autre mode, ces circuits électriques ne font pas partie du dispositif de commande, mais sont commandés par le module de couplage du dispositif de commande.

L'invention vise également un système de commande de recharge et de décharge de batteries d'un ensemble desdites batteries, chacune de ces batteries étant reliée à un circuit électrique reliant une source d'alimentation à un dispositif consommateur pour former un circuit électrique commandable, dit de recharge, reliant la batterie à la source d'alimentation et un circuit électrique commandable, dit de décharge, reliant la batterie au dispositif consommateur, le système comportant:

- un dispositif de commande conforme à l'invention, tel que décrit précédemment ;
- la source d'alimentation ; et
- le dispositif consommateur.

Le dispositif de commande en fonctionnement est tel que le dispositif consommateur est alimenté soit par la source d'alimentation, soit par la décharge d'une batterie.

Dans un mode de réalisation, la source d'alimentation est un générateur électrique, un groupe électrogène, un panneau solaire ou une éolienne. Plusieurs types de sources sont alors envisageables.

Dans un mode de réalisation, le dispositif consommateur est une station de base de communications sans fil ou un dispositif médical.

L'invention peut donc être mise en œuvre pour alimenter sans coupure des équipements de télécommunications et assurer une couverture d'un réseau de télécommunications dans des zones qui ne disposent pas d'un réseau électrique fiable, telle que les zones rurales ou des zones avec des conditions géographiques, climatiques ou économiques difficiles.

L'invention peut aussi être mise en œuvre pour alimenter sans coupure i.e. sans interruption, dans de telles zones, des dispositifs médicaux ayant de très fortes exigences en termes de disponibilité d'alimentation, nécessitant par exemple une disponibilité permanente.

L'invention peut aussi être mise en œuvre pour alimenter, dans des telles zones, d'autres dispositifs avec des contraintes moins exigeantes.

L'invention vise également un programme d'ordinateur sur un support d'enregistrement, ce programme étant susceptible d'être mis en œuvre dans un ordinateur ou dans un dispositif de commande conforme à l'invention, ce programme comportant des instructions adaptées à la mise en œuvre d'un procédé de commande tel que décrit ci-dessus.

Ce programme peut utiliser n'importe quel langage de programmation, et être sous la forme de code machine, code source, code objet, ou de code intermédiaire entre code source et code objet, tel que dans une forme partiellement compilée, ou dans n'importe quelle autre forme souhaitable.

En particulier, ce programme peut être exécuté par un microcontrôleur μC (« micro-Controller » en anglais).

L'invention vise aussi des supports d'information ou d'enregistrement lisibles par un ordinateur, et comportant des instructions du programme d'ordinateur tel que mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, chaque support d'informations ou d'enregistrement peut être un circuit intégré dans lequel le programme est incorporé, le circuit étant adapté pour exécuter ou pour être utilisé dans l'exécution du procédé de commande selon l'invention.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] La figure 1 illustre un système de commande de deux batteries conformément à un mode de réalisation ;

[Fig. 2] La figure 2 est un organigramme représentant des étapes principales d'un procédé de commande conformément à un mode de réalisation de l'invention ;

[Fig. 3] La figure 3 est un organigramme représentant des étapes d'un procédé de commande conformément au mode de réalisation de l'invention présenté à la figure 1 ;

[Fig. 4] La figure 4 est un chronogramme représentant des niveaux de charge de batteries de différentes capacités pilotées selon le procédé de commande dont les étapes sont présentées à la figure 3 ;

[Fig. 5] La figure 5 est un chronogramme représentant des niveaux de charge de batteries ayant une même capacité et pilotées selon un procédé de commande conformément à un mode de réalisation;

[Fig. 6] La figure 6 est un chronogramme représentant des niveaux de charge de trois batteries pilotées selon un procédé de commande conformément à un mode de réalisation de l'invention ;

[Fig. 7] La figure 7 est un organigramme représentant des étapes d'un procédé de commande d'un ensemble de n batteries d'un système HGB conformément à un mode de réalisation de l'invention ;

[Fig. 8] La figure 8 est un chronogramme représentant des niveaux de charge de trois batteries pilotées selon un procédé de commande conformément à un mode de réalisation de l'invention ;

[Fig. 9] La figure 9 est un chronogramme représentant des niveaux de charge de quatre batteries pilotées selon un procédé de commande conformément à un mode de réalisation de l'invention ;

[Fig. 10] La figure 10 est un chronogramme représentant des niveaux de charge de quatre batteries pilotées selon un procédé de commande conformément à un autre mode de réalisation ;

[Fig. 11] La figure 11 illustre un système de commande de deux batteries conformément à un mode de réalisation dans lequel le système comporte deux sources d'alimentation ;

[Fig. 12] La figure 12 est un organigramme représentant des étapes d'un procédé de commande conformément au mode de réalisation de l'invention présenté à la figure 11 ;

[Fig. 13] La figure 13 illustre l'architecture fonctionnelle d'un dispositif de commande selon un mode de réalisation ; et

[Fig. 14] La figure 14 illustre l'architecture matérielle d'un dispositif de commande selon un mode de réalisation de l'invention.

Description des modes de réalisation

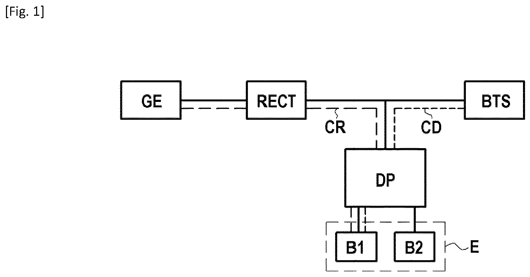

La figure 1 illustre une architecture d'un système de commande d'un ensemble E de batteries B1 et B2, le système étant conforme à l'invention. Chacune de ces batteries B1 et B2 est reliée à un circuit électrique reliant une source d'alimentation GE à un dispositif consommateur BTS pour former :

- un circuit électrique commandable de recharge CR reliant la batterie à la source d'alimentation GE; et

- un circuit électrique commandable de décharge CD reliant la batterie au dispositif consommateur BTS et réalisant une fonction diode pour éviter un courant de circulation entre les batteries B1 et B2.

Le système comporte:

- un dispositif de commande DP conforme à l'invention;
- la source d'alimentation GE; et
- le dispositif consommateur BTS.

Dans ce mode de réalisation, la source d'alimentation est un groupe électrogène formant avec les batteries B1 et B2 un système d'alimentation hybride de type HGB. Les deux batteries B1 et B2 sont de type Lithium. Le dispositif consommateur BTS est une station de base d'un réseau de télécommunications.

Le système de commande est situé dans une zone rurale ne disposant pas d'un réseau électrique. Une alimentation électrique permanente du dispositif consommateur BTS est requise pour assurer une couverture réseau dans cette zone rurale.

Le dispositif de commande DP met en œuvre un procédé de commande conforme à l'invention pour commander la recharge et la décharge des batteries B1 et B2.

Dans cet exemple, des redresseurs RECT (pour « rectifier » en anglais) sont placés à la sortie de la source GE pour convertir un courant alternatif AC généré par la source GE en un courant continu DC.

En ce qui suit, nous désignons par « commander une recharge (respectivement une décharge ou une mise au repos) d'une batterie », commander les circuits électriques de recharge et de décharge correspondants à cette batterie pour sa recharge (respectivement sa décharge ou sa mise au repos).

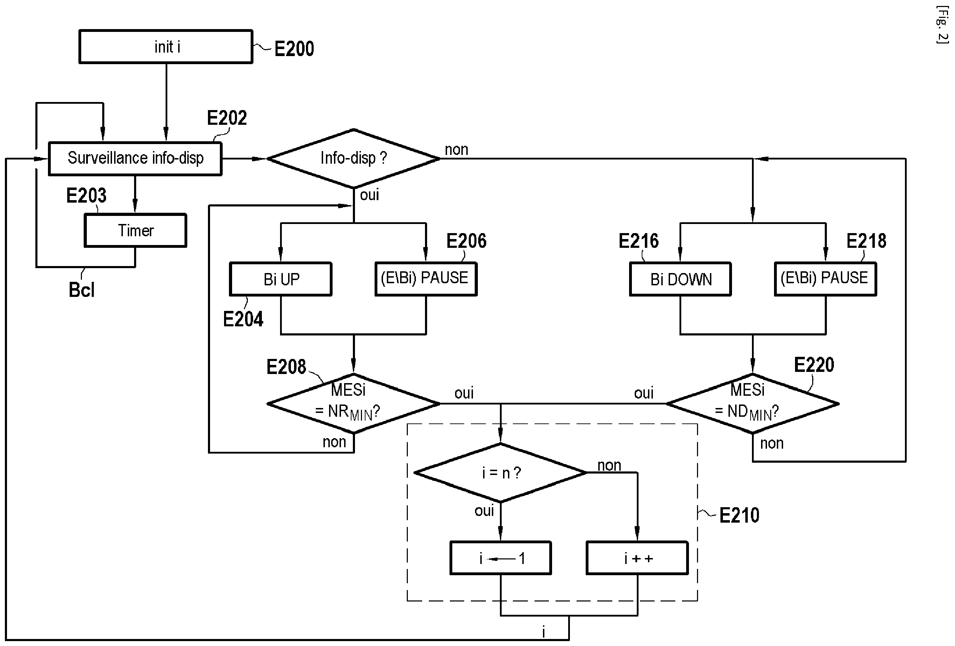

La figure 2 est un organigramme représentant, d'une façon générale, des étapes d'un procédé, conforme à l'invention, de commande d'un ensemble E de batteries. Le procédé est mis en œuvre par un dispositif de commande DP conforme à l'invention.

Dans un mode de réalisation décrit ici, le dispositif de commande DP commande un ensemble de deux batteries B1 et B2. Le dispositif de commande D et l'ensemble E sont compris dans un système de commande tel que présenté par la figure 1. Dans cet exemple, nous supposons qu'à un état initial, les deux batteries B1 et B2 sont mises au repos et que le niveau de charge de la batterie B1 est inférieur à celui de la batterie B2.

Le procédé est initié au cours d'une étape E200, en considérant par exemple que la dernière batterie Bi ayant été mise au repos est la batterie B1 et que la source d'alimentation GE est initialement en un état actif. L'indice « i » est un entier positif compris entre 1 et le nombre de batteries de l'ensemble E, c'est-à-dire entre 1 et 2 dans cet exemple, initialisé au cours de l'étape E200 à la valeur 1. La batterie B1 peut être considérée comme la dernière batterie ayant été mise au repos car son niveau de charge est inférieur à celui de la batterie B2.

Au cours d'une étape E202, le dispositif de commande DP surveille une information info-disp représentative de l'état d'activité de la source d'alimentation GE.

Nous supposons qu'initialement, l'état de la source d'alimentation GE est actif.

Tant que l'état de la source d'alimentation GE est actif:

- le dispositif DP commande les circuits électriques correspondants à la dernière batterie Bi mise au repos, soit dans cet exemple, à la première itération, la batterie B1, pour une recharge E204 de cette batterie B1 avec la source d'alimentation GE jusqu'à un niveau de charge déterminé $NR_{MIN}$; et
- simultanément à la recharge E204, le dispositif DP commande les circuits électriques correspondants à l'autre batterie de l'ensemble E, soit la batterie B2 à la première itération, pour une mise au repos E206 de cette autre batterie B2; le dispositif consommateur BTS étant alimenté avec la source d'alimentation GE.

L'étape de surveillance E202 est comprise dans une boucle Bcl qui comporte une étape E203 d'attente d'une durée TIMER entre deux itérations successives de l'étape de surveillance E202.

Si la durée TIMER expire avant que le niveau de charge de la batterie B1 atteigne le niveau déterminé $NR_{MIN}$ et que l'état de la source d'alimentation GE est encore actif, le dispositif de commande DP continue à commander la recharge de la batterie B1 (E204) et la remise au repos de la batterie B2 (E206).

Au cours d'une étape E208, le dispositif de commande DP obtient une information MESi indiquant si le niveau de charge de la batterie en recharge B1 (E204) a atteint le niveau déterminé $NR_{MIN}$.

Si tel n'est pas le cas (le niveau de charge de la batterie B1 n'a pas atteint le niveau déterminé $NR_{MIN}$), l'étape E208 est suivie de la recharge E204 de la batterie B1 et de la mise au repos E206 de la batterie B2.

Si tel est le cas, le dispositif de commande change la valeur de l'indice i au cours d'une étape E210 et exécute de nouveau l'étape de surveillance E202. En effet, l'indice i est relatif à la dernière batterie ayant été mise au repos, qui est dans cet exemple d'implémentation, la batterie B2.

Ainsi, à la prochaine itération de la boucle de l'étape de surveillance E202, si l'information info-disp confirme que l'état de la source GE est actif, le dispositif de commande DP commande, la recharge E204 de la batterie B2 jusqu'au niveau de charge déterminé $NR_{MIN}$ et la mise au repos E206 de la batterie B1.

Dans ce mode de réalisation, le changement E210 de l'indice i est une incrémentation par une unité si i est strictement inférieur au nombre n de batteries, ou une affectation de la valeur 1 si i est égale à n.

Supposons qu'au cours d'une itération postérieure de l'étape de surveillance E202, l'état de la source GE devient inactif.

Tant que l'état de la source d'alimentation GE est inactif:

- le dispositif DP commande une décharge E216 de la dernière batterie Bi mise au repos, soit dans cet exemple la batterie B1, jusqu'à un niveau de charge déterminé $ND_{MIN}$, le dispositif consommateur BTS étant alimenté avec cette batterie en décharge, B1 ; et

- simultanément à la décharge E216, le dispositif DP commande une mise au repos E218 de l'autre batterie de l'ensemble E, soit dans cet exemple la batterie B2.

Si le dispositif de commande DP obtient, au cours d'une étape E220, une information MESi indiquant que le niveau de charge de la batterie en décharge B1 (E216) a atteint le niveau déterminé $ND_{MIN}$, le dispositif de commande change la valeur de l'indice i au cours de l'étape E210 et exécute de nouveau l'étape de surveillance E202.

Le dispositif DP change alternativement de batterie à recharger (E204) ou à décharger (E216), et par conséquent de batterie à mettre au repos (E206 ou E218).

Dans le mode décrit ci-dessus, l'étape de surveillance E202 se répète en boucle selon un compteur à rebours d'une durée TIMER.

En variante, l'étape de surveillance E202 peut être déclenchée sur réception d'un message émis par un autre dispositif.

En variante, l'étape de surveillance E202 peut être déclenchée suite à un changement E210 de la valeur de l'indice i.

Dans un mode de réalisation, si les niveaux de charge des deux batteries B1 et B2 atteignent le niveau de charge déterminé $NR_{MIN}$ alors que l'état de la source d'alimentation GE est encore actif, le dispositif de commande DP met les deux batteries B1 et B2 au repos.

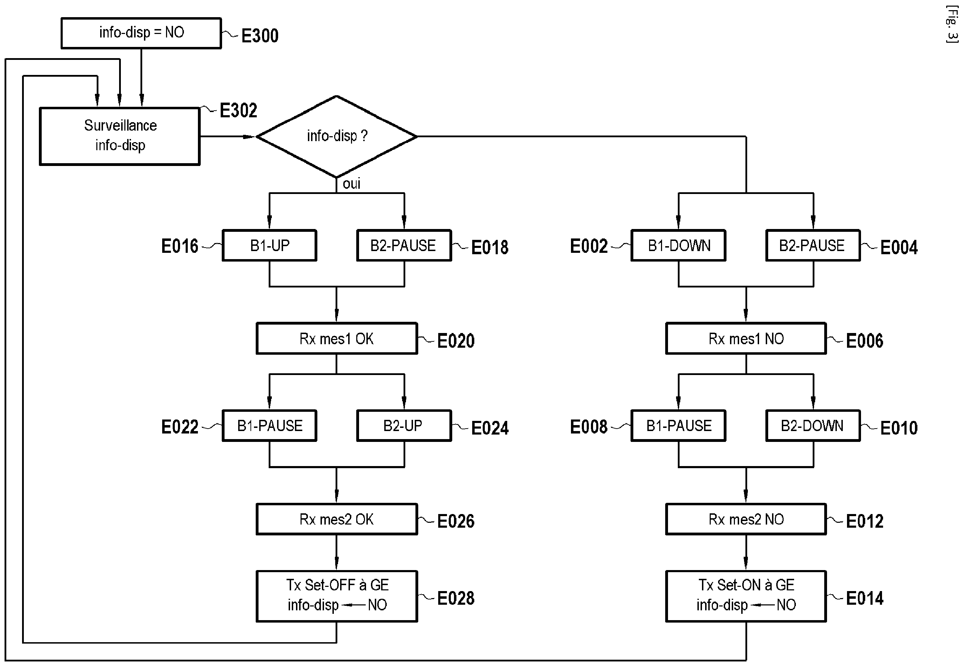

La figure 3 est un organigramme représentant des étapes d'un procédé de commande d'un ensemble E de deux batteries B1 et B2 conformément à un mode de réalisation de l'invention. Le procédé est mis en œuvre par le dispositif de commande DP conforme à l'invention et compris dans le système de commande décrit en référence à la figure 1.

Dans ce mode de réalisation, le dispositif consommateur BTS est alimenté soit par le groupe électrogène GE, soit par l'une des batteries B1 ou B2.

Dans ce mode de réalisation, le dispositif de commande DP commande les batteries B1 et B2 de l'ensemble E, mais aussi l'état d'activité du groupe électrogène GE.

Le procédé est initié au cours d'une étape E300. Le groupe électrogène GE est initialement en arrêt.

Au cours d'une étape E302, le dispositif de commande DP obtient une information info-disp représentative de l'état d'activité de la source d'alimentation GE, cette information étant fournie dans cet exemple par le dispositif de commande lui-même. Cette information indique que la source GE est en état inactif.

Nous supposons qu'initialement, les batteries B1 et B2 sont chargées à un niveau de charge élevé, par exemple de 100%.

Afin d'alimenter le dispositif consommateur BTS, le dispositif DP commande les circuits électriques correspondant à la batterie B1 pour sa décharge E002 jusqu'à un niveau de charge déterminé $ND_{MIN}$ considéré comme faible, par exemple de 0%.

Simultanément à la décharge E002, le dispositif DP met au repos la batterie B2, en commandant l'ouverture des circuits de recharge et de décharge correspondants à la batterie B2 pour sa mise au repos E004.

Au cours d'une étape E006, le dispositif de commande DP reçoit une information mesl représentative du niveau de charge de la batterie B1. Cette information indique que le niveau de charge de la batterie B1 a atteint le niveau de charge $ND_{MIN}$ de 0%.

Pour maintenir l'alimentation du dispositif consommateur BTS, le dispositif DP commande une décharge E010 de la batterie B2 jusqu'à un niveau de charge déterminé $ND_{MIN}$ considéré comme faible, par exemple de 0%. Le dispositif consommateur BTS est alors alimenté par la batterie B2. Le dispositif de commande DP commande une mise au repos E008 de la batterie B1, simultanée à la décharge E010.

Au cours d'une étape E012, le dispositif de commande DP reçoit une deuxième information mes2 représentative du niveau de charge de la batterie B2. Cette information indique que le niveau de charge de la batterie B2 a atteint le niveau de charge déterminé $ND_{MIN}$ de 0%.

Les deux batteries B1 et B2 ayant les niveaux de charge déterminés considérés comme faibles, le dispositif de commande DP commande, au cours d'une étape E014 la mise en marche du groupe électrogène GE. Le dispositif consommateur BTS est alors alimenté directement par la source d'alimentation GE.

Suite à l'étape E014 et au cours d'une nouvelle itération de l'étape E302, l'information info-disp indique alors que l'état d'activité de la source d'alimentation GE est actif.

Dans cet exemple, la dernière batterie à avoir été mise au repos (E008) est la batterie B1. Par conséquent, le dispositif DP commande une recharge E016 de cette batterie B1 jusqu'à un niveau de charge déterminé $NR_{MIN}$ considéré comme élevé, par exemple de 100%, et simultanément, une mise au repos E018 de la batterie B2.

Nous notons qu'à un instant donné, le groupe électrogène GE alimente à la fois le dispositif consommateur BTS et une batterie parmi B1 et B2.

Au cours d'une étape E020, le dispositif de commande DP reçoit une information mes1 représentative du niveau de charge de la batterie B1, cette information indiquant que cette batterie B1 est chargée au niveau NR$_{MIN}$ considéré comme élevé, de 100%.

Sur réception de cette information mes1, le dispositif DP commande simultanément une mise au repos E022 de la batterie B1 et une recharge E024 de la batterie B2 jusqu'à un niveau de charge déterminé NR$_{MIN}$, par exemple de 100%.

Au cours d'une étape E026, le dispositif de commande DP reçoit une information mes2 représentative du niveau de charge de la batterie B2, cette information indiquant que cette batterie B2 est chargée au niveau élevé déterminé NR$_{MIN}$ de 100%.

De ce fait, le dispositif de commande DP, commande au cours d'une étape E028 la désactivation de la source GE.

Le procédé se reboucle à partir de l'étape E302.

Nous notons que chacune des deux batteries B1 et B2 est mise au repos entre chaque recharge et chaque décharge.

Dans ce mode de réalisation, le dispositif de commande DP met en arrêt la source GE (E208) uniquement lorsque toutes les batteries B1 et B2 ont des niveaux de charge considérés comme élevés. En variante, le dispositif de commande DP peut mettre en arrêt la source GE dès que le niveau de charge de l'une des batteries B1 ou B2 est considéré comme élevé.

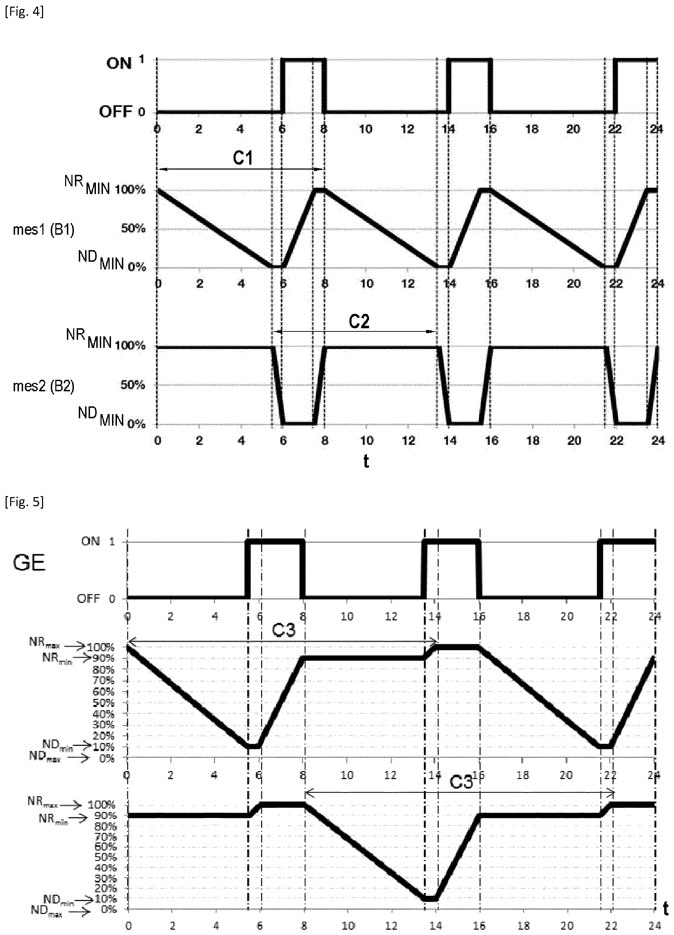

La figure 4 est un chronogramme représentant les différentes étapes du procédé de commande conformément au mode de réalisation de l'invention décrit en référence à la figure 3. Ce chronogramme représente l'évolution des niveaux de charge des batteries B1 et B2 en fonction du temps, en heures.

Les deux batteries B1 et B2 ont une même tension nominale.

La batterie B1 est au Lithium d'une capacité nominale légèrement inférieure à celle d'un système HGB classique de l'art antérieur, par exemple une capacité de 90%. Nous rappelons qu'un système d'alimentation HGB de l'art antérieur comporte une batterie unique ou plusieurs batteries branchées en parallèle et fonctionnant en parallèle aussi bien en recharge qu'en décharge.

La deuxième batterie B2 couvre seulement la durée d'une mise au repos de la batterie B1. La capacité nominale de la batterie B2 est inférieure à celle de la batterie B1.

Dans cet exemple, la batterie B2 est aussi en Lithium, mais elle peut être d'un autre type.

La décharge de la batterie B1 (E002) et la mise au repos de la batterie B2 (E004) durent sur la figure 4 de l'instant 0 jusqu'à la 5ème heure et demie.

La mise au repos de la batterie B1 (E008) et la décharge de la batterie B2 (E010) durent de la 5ème heure et demie jusqu'à la 6ème heure. Les deux batteries B1 et B2 étant déchargées, l'étape E014 d'activation de la source GE est mise en œuvre à la 6ème heure.

La recharge de la batterie B1 (E016) et la mise au repos de la batterie B2 (E018) durent de la 6ème heure jusqu'à la 7ème heure et demie, et elles sont suivies par la mise au repos de la batterie B1 (E022) et la recharge de la batterie B2 (E024) jusqu'à la 8ème heure où l'étape E028 est mise en œuvre pour désactiver le groupe électrogène.

La boucle est reprise à partir de la 8ème heure avec une nouvelle mise en œuvre des étapes E002 et E004.

Dans ce mode de réalisation, une séquence cyclique d'une durée de 8 heures est appliquée de manière alternée entre les batteries B1 et B2, comportant une décharge, suivie d'une mise au repos, puis d'une recharge, et ensuite d'une autre mise au repos. Les durées de décharge, de recharge et de mise au repos sont différentes pour chacune des batteries B1 et B2. L'application de cette séquence cyclique à la batterie B2 est décalée de 5 heures et demie par rapport à son application à la batterie B1.

En outre, une séquence cyclique C1 d'une durée de 8 heures est appliquée à la batterie B1, comportant une décharge de 5 heures et demie, suivie d'une mise au repos d'une demi-heure, suivies d'une recharge d'une heure et demie, suivies d'une autre mise au repos d'une demi-heure.

Une autre séquence cyclique C2 d'une durée de 8 heures aussi est appliquée à la batterie B2, comportant une décharge d'une demi-heure, suivie d'une mise au repos d'une heure et demie, suivies d'une recharge d'une demi-heure, suivies d'une autre mise au repos de 5 heures et demie.

Nous notons que l'organigramme décrit en référence à la figure 2 est aussi conforme au mode de réalisation décrit par le chronogramme de la figure 4, l'indice i étant initialisé (E200) à la valeur 1, l'information info-disp étant initialement négative et l'étape E202 de surveillance de l'état d'activité de la source étant remise en œuvre après chaque exécution de l'étape E210 de modification de l'indice i, sans tenir compte d'une boucle Bcl.

La figure 5 est un chronogramme représentant les différentes étapes du procédé de commande conformément à un autre mode de réalisation de l'invention.

Ce chronogramme représente l'évolution des niveaux de charge des batteries B1 et B2 en fonction du temps, en heures.

Le mode de réalisation décrit ici est similaire au mode décrit en référence aux figures 3 et 4, les deux batteries B1 et B2 ayant encore une même tension nominale, mais, dans ce mode, les batteries B1 et B2 ont également une même capacité nominale. La somme des capacités des batteries B1 et B2 peut correspondre approximativement à la capacité installée de batteries d'un système HGB de l'art antérieur.

Dans cet exemple, nous supposons qu'initialement l'état de la source d'alimentation GE est inactif et que les niveaux de charge des deux batteries B1 et B2 sont à un niveau $NR_{MIN}$ de 90%, ce niveau initial $NR_{MIN}$ étant inférieur à un niveau de charge maximal $NR_{MAX}$ de 100%.

Dans ce mode, contrairement au mode décrit précédemment en référence aux figures 3 et 4, dès qu'une seule batterie est déchargée jusqu'à un niveau de charge déterminé $ND_{MIN}$ et considéré comme faible, le dispositif de commande DP commande la mise en marche de la source d'alimentation GE.

Dans cet exemple, le niveau de charge déterminé considéré comme faible $ND_{MIN}$ est non nul, par exemple de 10%. De ce fait, à un instant donné, au moins une des deux batteries a un niveau de charge non nul, ce qui permet de garantir l'alimentation du dispositif consommateur BTS dans l'hypothèse où le dispositif consommateur ne pourrait pas être alimenté par la source GE en raison d'une panne de la source GE par exemple, ou d'une coupure entre la source GE et le dispositif consommateur BTS.

Par rapport au mode décrit en référence aux figures 3 et 4, une tolérance est ajoutée à un temps d'intervention pour la maintenance, pour réparer la source GE ou pour connecter la source GE au dispositif consommateur BTS par exemple. Cette tolérance correspondant au temps de décharge d'une batterie jusqu'à un niveau de charge $ND_{MAX}$ nul.

Le fait que le niveau de charge initial $NR_{MIN}$ est inférieur au niveau $NR_{MAX}$ permet de maximiser le rendement de la source GE en rechargeant une des batteries de ce niveau de charge $NR_{MIN}$ de 90% au niveau $NR_{MAX}$ de 100% pendant que la source GE alimente le dispositif consommateur BTS simultanément à la mise au repos de l'autre batterie ayant un niveau de charge faible $ND_{MIN}$ de 10%. Tel qu'illustré à la figure 5, ce cas se produit de la 5ème heure et demie à la 6ème heure, de la 13ème heure et demie à la 14ème heure et de la 21ème heure et demie à la 22ème heure. L'évolution du chronogramme de la figure 5 est expliquée en ce qui suit.

Initialement, l'état de la source d'alimentation GE est inactif.

De l'instant 0 jusqu'à la 5ème heure et demie, le dispositif de commande DP commande la décharge de la batterie B1 jusqu'à un niveau de charge déterminé $ND_{MIN}$, de 10% à titre d'exemple, et la mise au repos de la batterie B2.

A la fin de ces étapes (à la 5ème heure et demie), le dispositif DP reçoit une information mes1 indiquant que le niveau de charge la batterie B1 a atteint le niveau de charge déterminé $ND_{MIN}$ de 10%. Le dispositif de commande DP commande alors la mise en marche de la source d'alimentation GE, d'une façon similaire à l'étape E014 décrite en référence à la figure 3.

De la 5ème heure et demie à la 6ème heure, le dispositif de commande DP commande la mise au repos de la batterie B1 et la recharge de la batterie B2 de son niveau de charge $NR_{MIN}$ à 90% à un niveau de charge déterminé $NR_{MAX}$ de 100%. Le rendement de la source GE est maximisé car la source GE alimente la batterie B2 en plus du dispositif consommateur BTS.

A la 6ème heure, le dispositif de commande DP reçoit une information mes2 indiquant que la batterie B2 est chargée au niveau 100%, il commande donc la mise au repos de cette batterie B2 et la recharge de la batterie B1 jusqu'à un niveau de charge déterminé de 90%.

Au bout de la 8ème heure, le dispositif de commande DP reçoit une information mes1 indiquant que la batterie B1 est chargée au niveau de charge de 90%. Le dispositif de commande DP commande alors l'arrêt de la source d'alimentation GE, d'une façon similaire à l'étape E028 décrite en référence à la figure 3.

De la 8ème heure à la 13ème heure et demie, le dispositif de commande DP commande la décharge de la batterie B2 pour alimenter le dispositif consommateur BTS, de son niveau de charge actuel de 100% au niveau de charge déterminé $ND_{MIN}$ de 10%. Simultanément, le dispositif DP commande la mise au repos de la batterie B1.

A la 13ème heure et demie, le dispositif de commande DP reçoit une information mes2 indiquant que la batterie B2 est déchargée au niveau $ND_{MIN}$ de 10%, il commande donc la mise au repos de cette batterie B2, la mise en marche de la source GE et la recharge de la batterie B1 de son niveau de charge actuel de 90% jusqu'à un niveau de charge déterminé $NR_{MAX}$ de de 100%.

A la 14ème heure, le dispositif de commande DP reçoit une information mes1 indiquant que le niveau de charge de la batterie B1 a atteint le niveau déterminé $NR_{MAX}$ de de 100%, le dispositif commande alors la mise au repos de la batterie B1 et la recharge de la batterie B2 jusqu'au niveau de charge déterminé $NR_{MIN}$ de 90%.

A la 16ème heure, le dispositif de commande DP reçoit une information mes2 indiquant que le niveau de charge de la batterie B2 a atteint le niveau déterminé $NR_{MIN}$ de 90%, le dispositif commande alors la mise au repos de cette batterie B2, la mise en arrêt de la source GE et la décharge de la batterie B1 pour alimenter le dispositif consommateur BTS, jusqu'au niveau de charge déterminé $ND_{MIN}$ de 10%.

A la 16ème heure et quart, la situation du système du commande est similaire à sa situation initiale à l'instant 0 : l'état de la source GE est inactif et les niveaux de charge des deux batteries B1 et B2 sont de 90%. Les étapes déjà décrites se reproduisent.

Une même séquence cyclique C3 d'une durée de 16 heures est appliquée de manière alternée entre les batteries B1 et B2. Cette séquence C3 comporte une décharge jusqu'au niveau $ND_{MIN}$, suivie d'une mise au repos, puis d'une première recharge jusqu'au niveau $NR_{MIN}$ suivie d'une autre mise au repos, puis d'une deuxième recharge jusqu'au niveau $NR_{MAX}$ suivie d'une autre mise au repos.

Dans le mode décrit ici, les durées de la décharge, de la première et deuxième recharge et de mises au repos comprises dans la séquence C3 sont identiques pour les deux batteries B1 et B2. Les deux batteries B1 et B2 ayant la même capacité, l'évolution de leurs niveaux de charge est identique mais avec un décalage temporel, de 8 heures dans cet exemple.

Dans ce mode, comme chaque batterie B1 et B2 a une capacité moitié de celle d'une batterie d'un système HGB de l'art antérieur, la source GE démarre deux fois plus souvent, mais son temps de fonctionnement est le même. Selon des données de fabricants des groupes électrogènes, jusqu'à une dizaine de démarrages par jour ne réduit pas la durée de vie d'un groupe électrogène GE et de son démarreur.

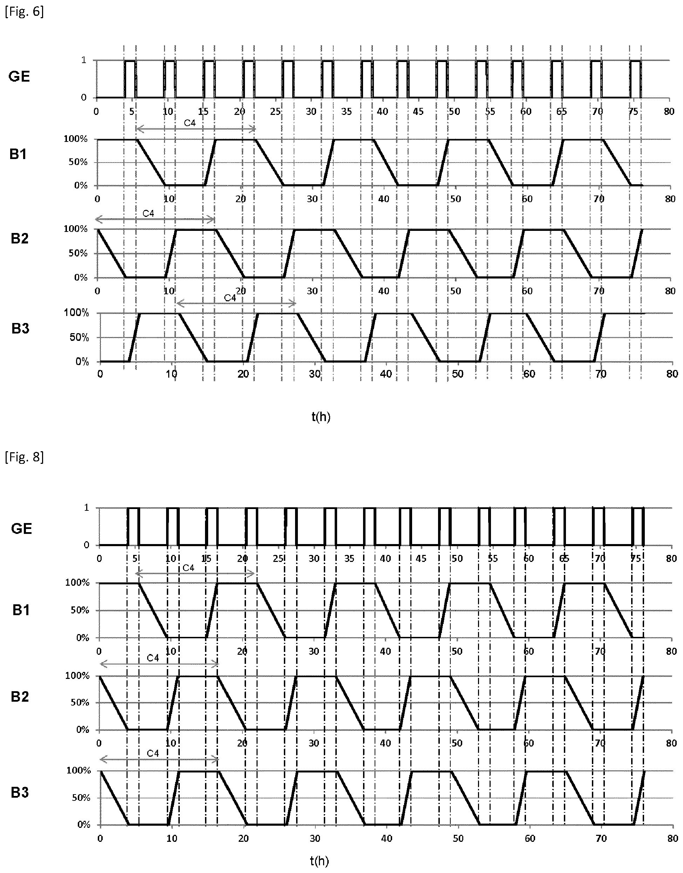

La figure 6 est un chronogramme représentant les différentes étapes d'un procédé de commande conformément à un mode de réalisation de l'invention. Dans ce mode de réalisation, l'ensemble E comporte trois batteries, B1, B2 et B3. Le dispositif de commande DP commande les trois batteries B1, B2 et B3, ainsi que la source d'alimentation GE (groupe électrogène).

Le dispositif de commande DP commande, à un instant donné, la recharge ou la décharge d'une batterie de l'ensemble E et la mise au repos des deux autres batteries de l'ensemble E.

Dans ce mode de réalisation, nous supposons que les trois batteries B1, B2 et B3 ont toutes une même tension nominale et une même capacité nominale, par exemple une tension nominale de 48V et une capacité nominale de 300 Ah. La tension de fonctionnement de la batterie peut par exemple varier de 44V à 56V en fonctionnement.

Supposons que la capacité nominale de chacune d'entre elles est égale au tiers d'une capacité nominale d'une batterie d'un système HGB de l'art antérieur, par exemple 100 Ah, les temps de recharge et décharge de chacune des batteries B1, B2 et B3 sont alors plus courts que ceux de la batterie de l'art antérieur, mais la mise au repos des batteries B1, B2 et B3 permet d'allonger leurs durées de vie.

Dans ce mode, nous supposons qu'initialement la source GE est inactive, que les batteries B1 et B2 sont chargées à un niveau de 100% et que le niveau de charge de la batterie B3 est de 0 %.

A l'instant 0, le dispositif de commande DP commande la décharge de la batterie B2 pour alimenter le dispositif consommateur BTS et la mise au repos des autres batteries B1 et B3.

A la 4ème heure, le dispositif de commande DP reçoit une information mes2 indiquant que le niveau de charge de la batterie B2 est de 0%. Deux batteries (B2 et B3) sont déchargées, le dispositif de commande DP commande alors la mise en marche de la source GE pour alimenter le dispositif consommateur BTS et charger la batterie B3 qui était au repos.

A la 5ème heure et demie, le dispositif de commande DP reçoit une information mes3 indiquant que le niveau de charge de la batterie B3 est de 100%. Deux batteries (B1 et B3) sont chargées, le dispositif de commande DP commande alors l'arrêt de la source GE, la décharge de la batterie B1 qui était au repos, et la mise au repos des autres batteries B2 et B3.

La situation à la 5ème heure et demie est similaire à la situation initiale : l'état de la source GE est inactif, deux batteries ont un niveau de charge de 100% et la troisième batterie a un niveau de charge de 0%. La suite des étapes présentées sur le chronogramme de la figure 6 n'est pas décrite car ces étapes sont similaires aux étapes précédentes (de l'instant 0 à la 5ème heure et demie) déjà décrites.

Une même séquence cyclique C4 est appliquée à chacune des batteries B1, B2 et B3. Cette séquence C4 comporte une décharge jusqu'au niveau de charge de 0%, suivie d'une mise au repos, puis d'une recharge jusqu'au niveau de charge de 100% suivie d'une autre mise au repos.

De plus, cette séquence cyclique C4 est appliquée d'une façon alternée à la batterie B2, puis la batterie B1, puis la batterie B3. Dans le mode décrit ici, les durées de décharge, de recharges et de mises au repos sont identiques pour toutes les batteries B1, B2 et B3.

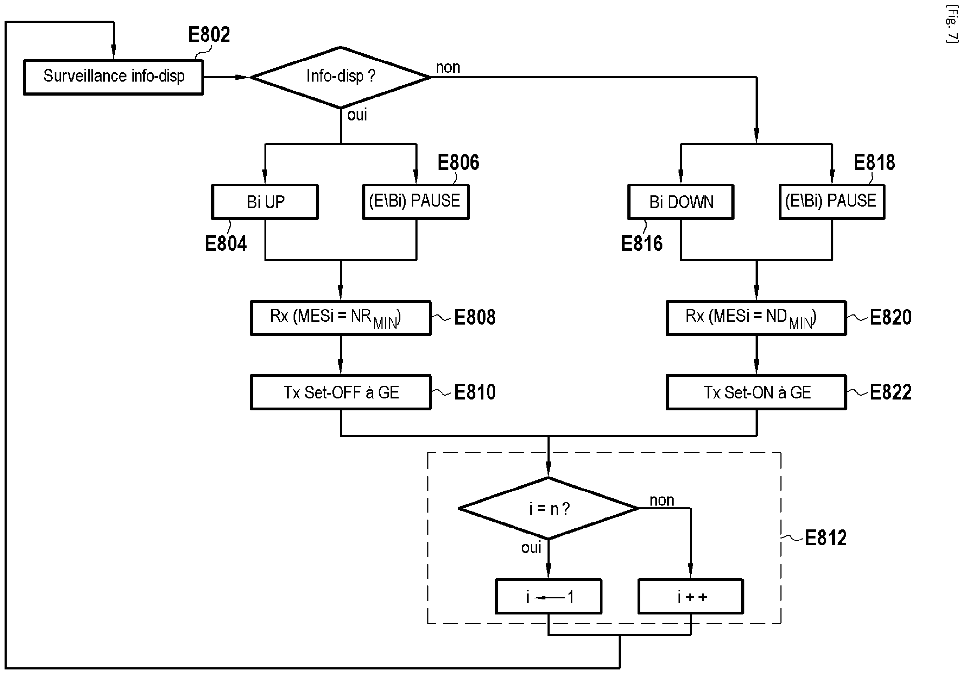

La figure 7 est un organigramme récapitulatif des étapes d'un procédé de commande d'un ensemble E de batteries conformément à un mode de réalisation de l'invention, similaire au mode décrit en référence à la figure 6, dans lequel l'ensemble E de batteries comporte un nombre n de batteries, où n est entier supérieur ou égal à 2.

Au cours d'une étape E802, le dispositif de commande DP surveille l'état d'activité de la source d'alimentation GE.

Tant que l'état de la source GE est actif, le dispositif de commande DP commande, au cours de deux étapes simultanées E804 et E806, la recharge d'une batterie Bi de l'ensemble E jusqu'à un niveau de charge déterminé $NR_{MIN}$ considéré comme élevé et la mise au repos des autres batteries de l'ensemble E, i étant un entier compris entre 1 et n et initialisé à une valeur déterminée. Dans le mode décrit en référence à la figure 6, i est initialisé à la valeur 2.

Au cours d'une étape E808, le dispositif de commande DP reçoit une information MESi indiquant que le niveau de charge de la batterie Bi a atteint le niveau $NR_{MIN}$ considéré comme élevé. Ainsi, le dispositif de commande DP commande la mise en arrêt de la source GE au cours d'une étape E810.

Suite à la mise en arrêt (E810) de la source GE, le dispositif de commande DP modifie au cours d'une étape E812 le nombre entier i pour changer à chaque itération de batterie relative à l'étape de recharge (E804) et ainsi les batteries relatives à la mise au repos (E806). Si l'entier i est égal au nombre de batteries n, alors i est réinitialisé à 1, sinon i est incrémenté d'une unité.

Tant que l'état de la source GE est inactif, le dispositif de commande DP commande, au cours de deux étapes simultanées E816 et E818, la décharge de la batterie Bi de l'ensemble E jusqu'à un niveau de charge déterminé $ND_{MIN}$ considéré comme faible et la mise au repos des autres batteries de l'ensemble E.

Au cours d'une étape E820, le dispositif de commande DP reçoit une information MESi indiquant que le niveau de charge de la batterie Bi a atteint le niveau $ND_{MIN}$ considéré comme faible. Ainsi, le dispositif de commande DP commande la mise en marche de la source GE au cours d'une étape E822.

Suite à la mise en marche (E822) de la source GE, le dispositif de commande DP modifie au cours d'une étape E812 le nombre entier i pour changer de batterie à décharger (E816) et les batteries à mettre au repos (E818). Si l'entier i est égal au nombre de batteries n, alors i est réinitialisé à 1, sinon i est incrémenté d'une unité.

Après chaque modification (E812) de l'entier i, l'étape de surveillance E802 est remise en œuvre.

La figure 8 est un chronogramme représentant les différentes étapes d'un procédé de commande conformément à un mode de réalisation de l'invention, qui diffère du mode décrit en référence aux figures 6 et 7 en ce que la capacité nominale de chacune des batteries B2 et B3 est égale à la moitié de celle de la batterie B1. Dans ce mode de réalisation, les batteries B2 et B3 sont rechargées, déchargées et mises au repos simultanément.

La séquence cyclique C4 décrite en référence à la figure 6 est appliquée à chacune des batteries B1, B2 et B3. En outre la séquence C4 est appliquée d'une façon alternée entre la batterie B1 d'une part, et simultanément les batteries B2 et B3 d'autre part.

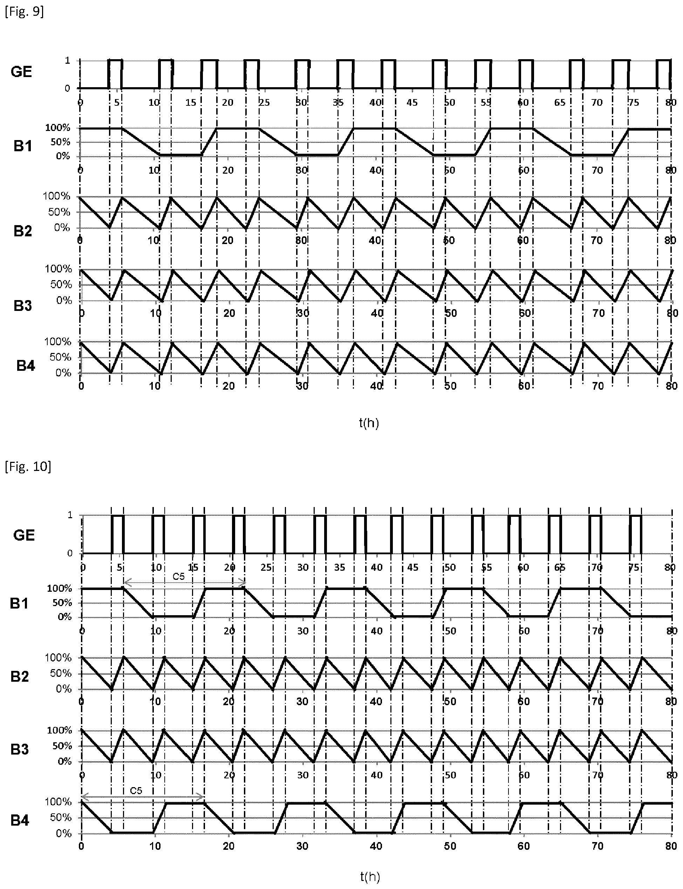

La figure 9 est un chronogramme représentant les différentes étapes d'un procédé de commande conformément à un mode de réalisation de l'invention, dans lequel l'ensemble de batteries E comporte 4 batteries B1 à B4 ayant toutes une même capacité nominale.

Dans le mode décrit ici, le dispositif de commande DP commande la mise au repos de la batterie B1 après chaque recharge et après chaque décharge de cette batterie B1. Cependant, les autres batteries de l'ensemble E ont des cycles simultanés de recharge et de décharge, sans mise au repos. La recharge de la batterie B1 est simultanée avec la recharge des autres batteries pour augmenter le rendement de la source GE. La décharge de la batterie B1 est aussi simultanée avec la décharge des autres batteries.

La figure 10 est un chronogramme représentant les différentes étapes d'un procédé de commande conformément à un autre mode de réalisation de l'invention dans lequel l'ensemble de batteries E comporte aussi 4 batteries B1 à B4 ayant toutes une même capacité nominale.

Ce mode diffère du mode décrit en référence à la figure 9 en ce que le dispositif de commande DP commande la mise en repos de chacune de deux batteries B1 et B4 de l'ensemble E après chaque recharge et chaque décharge de la batterie en question.

Une séquence cyclique C5 comportant une décharge suivie d'une mise au repos et une recharge suivie d'une autre mise au repos, est appliquée d'une façon alternée entre les batteries B1 et B4.

Par rapport au mode décrit en référence à la figure 9, le mode illustré par la figure 10 permet d'allonger la durée de vie de la batterie B4, en plus de celle de la batterie B1, en maintenant un rendement acceptable de la source GE malgré la réduction de charge (3 batteries à la fois).

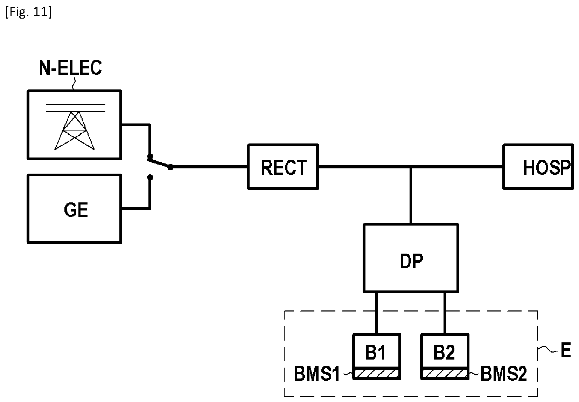

La figure 11 illustre une architecture d'un système de commande d'un ensemble E de batteries B1 et B2, conformément à un mode de réalisation de l'invention. Ce système comporte deux sources d'alimentation : un réseau électrique non fiable N_ELEC et un groupe électrogène GE, le dispositif de commande DP conforme à l'invention et un dispositif consommateur HOSP.

Dans ce mode de réalisation, le dispositif consommateur HOSP est un dispositif médical électronique, exigeant une disponibilité permanente d'un courant électrique. Le système présenté à la figure 11 est situé dans une zone rurale ne disposant pas d'un réseau électrique fiable.

Dans ce mode de réalisation, le dispositif de commande DP pilote un ensemble de deux batteries B1 et B2, ainsi que la source GE, mais ne commande pas l'état d'activité de la source N_ELEC.

Dans ce mode de réalisation, chacune des batteries B1 et B2 comporte une entité électronique de gestion, associée à la batterie pour sa gestion, et appelée BMS (pour « Battery Management System » en anglais).

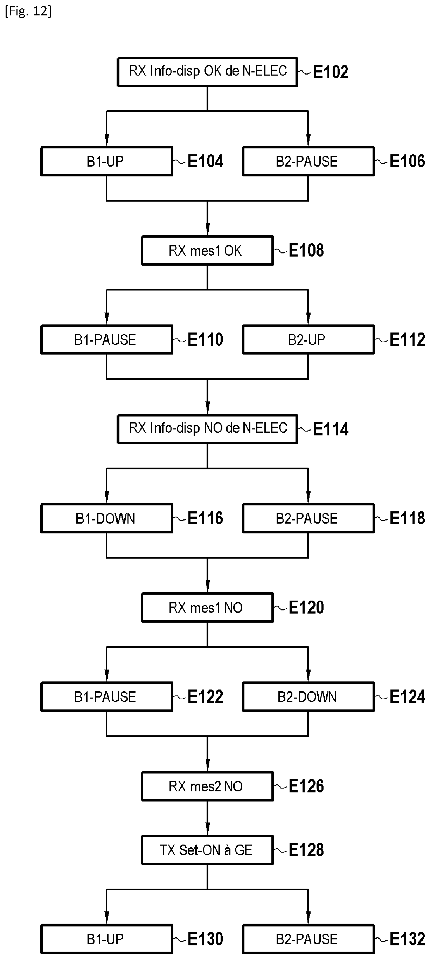

La figure 12 est un organigramme représentant des étapes d'un procédé de commande d'un ensemble E de deux batteries B1 et B2 conformément à un mode de réalisation de l'invention. Le procédé est mis en œuvre par le dispositif de commande DP conforme à l'invention et compris dans le système de commande décrit en référence à la figure 11.

Nous supposons qu'initialement, les niveaux de charge des deux batteries B1 et B2 sont inférieurs à un niveau de charge de 100%. Le groupe électrogène GE est inactif.

Au cours d'une étape E102, le dispositif de commande DP obtient une information info-disp représentative de l'état d'activité du réseau électrique N_ELEC. Cette information indique que la source N_ELEC est en état actif.

Dans ce mode de réalisation, l'information info-disp sur l'état d'activité de la source N_ELEC est reçue d'un dispositif d'alarme. En variante, cette information info-disp est surveillée par le dispositif de commande DP périodiquement d'une façon permanente, par exemple chaque 2 secondes.

Tant que la source N_ELEC est disponible, le dispositif DP commande la recharge des batteries B1 et B2. Le dispositif consommateur HOSP est alimenté directement par la source N_ELEC.

Au cours d'une étape E104, le dispositif DP commande la recharge de la batterie B1 jusqu'à un niveau de charge déterminé, de 100% par exemple. Simultanément, au cours d'une étape E106, le dispositif DP met la batterie B2 au repos.

Au cours d'une étape E108, le dispositif de commande DP reçoit une information mes1 représentative du niveau de charge de la batterie B1, indiquant que le niveau de charge de la batterie B1 est de 100%. Le dispositif DP commence alors à recharger la deuxième batterie B2.

Au cours de deux étapes simultanées E110 et E112, le dispositif de commande DP commande la mise au repos de la batterie B1 et la recharge de la batterie B2 jusqu'à un niveau de charge déterminé, de 100% par exemple.

Comme l'état d'activité de la source N_ELEC est sous surveillance, au cours d'une étape E114, le dispositif de commande DP obtient l'information info-disp indiquant que l'état de la source N_ELEC est devenu inactif, avant même que le niveau de charge de la batterie B2 ait atteint le niveau déterminé de 100%.

De ce fait, pour maintenir l'alimentation du dispositif consommateur HOSP, le dispositif de commande DP commande la décharge de la batterie B1 au cours d'une étape E116 jusqu'à un niveau de charge déterminé, de 0% par exemple, et met au repos la batterie B2 au cours d'une étape E118 simultanée à l'étape E116. Le dispositif DP sélectionne la décharge de la dernière batterie à avoir été mise au repos, à savoir la batterie B1.

Au cours d'une étape E120, le dispositif de commande DP reçoit une information mes1 indiquant que le niveau de charge de la batterie B1 a atteint le niveau de 0%.

Le dispositif de commande DP commande alors l'alimentation du dispositif consommateur HOSP par la batterie B2. Au cours de deux étapes simultanées E122 et E124, le dispositif de commande DP commande la mise au repos de la batterie B1 et la décharge de la batterie B2 jusqu'à un niveau de charge déterminé, de 0% par exemple.

Au cours d'une étape E126, le dispositif de commande DP reçoit une information mes2 indiquant que le niveau de charge de la batterie B2 a atteint le niveau de 0%.

Les niveaux de charge des deux batteries B1 et B2 ayant le niveau déterminé de 0% considéré comme faible, le dispositif de commande DP commande, au cours d'une étape E128 la mise en marche du groupe électrogène GE pour alimenter le dispositif consommateur HOSP et recharger les batteries B1 et B2 d'une façon alternative.

La batterie B1 étant la dernière à avoir été mise au repos (E122), au cours d'une étape E130, le dispositif DP commande la recharge de la batterie B1, et simultanément, au cours d'une étape E132, la mise au repos de la batterie B2.

Autres modes de réalisation

Les modes de réalisation déjà décrits peuvent avoir différentes variantes, par exemple sur les choix des niveaux de charge qui déclenchent la recharge ou la décharge d'une batterie.

Dans un mode de réalisation, la source d'alimentation est un réseau électrique N_ELEC non fiable, qui peut avoir plusieurs coupures ou fournir un courant ou une tension électrique avec une valeur non stable.

Dans un mode de réalisation, la source d'alimentation est un générateur SOL d'énergie électrique à partir de l'énergie solaire.

Dans un mode de réalisation, la source d'alimentation est un générateur WND d'énergie électrique à partir de l'énergie éolienne.

Dans un mode de réalisation, le système de commande comporte plusieurs sources d'alimentation, d'un même type ou de types différents.

Dans un mode de réalisation, le système de commande comporte au moins deux sources d'alimentation dont une est un générateur de type Stirling. Ce type de générateur peut couvrir la puissance d'utilisation, c'est-à-dire alimenter le dispositif consommateur BTS, mais pas la recharge des batteries.

Le dispositif consommateur peut être un dispositif autre qu'une station de base BTS ou un dispositif médical HOSP. Le dispositif consommateur est un dispositif électronique qui requiert d'être alimenté électriquement avec un seuil minimum de disponibilité et/ou un seuil minium de stabilité au niveau de l'intensité de courant, de la tension ou de la puissance électrique qui l'alimente.

Dans un mode de réalisation, le système de commande comporte plusieurs dispositifs consommateurs.

Dans un mode de réalisation, au moins une des batteries B1 et B2 pilotées par le dispositif de commande est de type Plomb, ou Nickel ou une batterie chaude.

Les batteries B1 et B2 de l'ensemble E de batteries ne sont pas forcément d'une même technologie.

Dans un mode de réalisation, les données mesl, mes2, mes3 représentatives des niveaux de charge des batteries de l'ensemble E sont basées sur des mesures de courant ou de tension au niveau des batteries.

Dans un mode de réalisation, les données mesl, mes2, mes3 représentatives des niveaux de charge des batteries de l'ensemble E sont basées sur des estimations, en utilisant par exemple des algorithmes d'apprentissage machine (« machine learning » en anglais).

Dans un mode de réalisation, les données mesl, mes2, mes3 représentatives des niveaux de charge des batteries sont basées sur des compteurs à rebours temporel TIMER. Par exemple, il peut être estimé que la batterie B1, dont le niveau de charge est présenté à la figure 4, se décharge au bout de 5 heures et demie, et se charge en 1 heure et demie.

Description d'un dispositif de commande conforme à l'invention

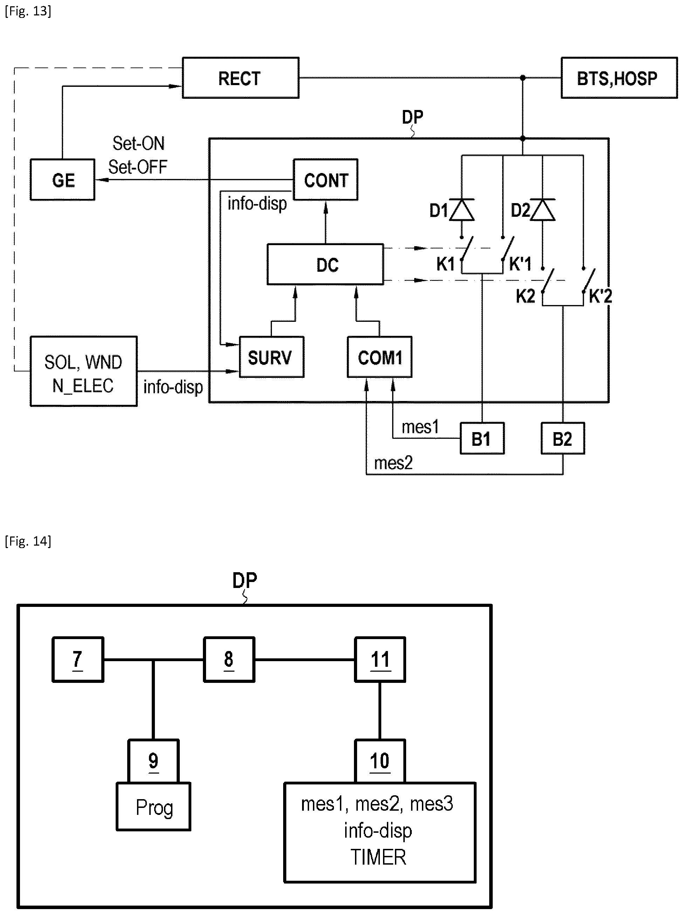

La figure 13 présente une architecture fonctionnelle d'un dispositif DP, conforme à l'invention, ainsi que deux sources d'alimentation de types différents : une première source de type groupe électrogène GE, et une deuxième source de type panneau solaire SOL, éolienne WND ou un réseau électrique N_ELEC.

Le dispositif de commande DP pilote un ensemble de deux batteries B1 et B2 qui peuvent chacune être connectée à une source d'alimentation et à un dispositif consommateur.

Le dispositif de commande DP comporte :

- un module de surveillance SURV ;
- un module de couplage DC ;
- des moyens de connexion K1, K'1 (et K2, K'2) et une fonction diode D1 (et D2) formant des circuits électriques de recharge et de décharge de la batterie B1 (et de B2), reliant cette batterie à une source parmi les sources N-ELEC, GE, SOL ou WND et au dispositif consommateur ;
- un module de communication COM ; et
- un module de contrôle CONT.

Le module de surveillance SURV est configuré pour surveiller des informations info-disp représentatives chacune d'un état d'activité d'une source d'alimentation GE, SOL, WND ou N_ELEC. Ces informations peuvent être obtenues par réception d'un message de la source en question ou par lecture à partir d'une mémoire.

Dans un mode particulier, lorsque l'état d'activité d'une source GE est piloté par le dispositif de commande DP, cette information info-disp est transmise du module de contrôle CONT au module de surveillance SURV.

Les moyens de connexion K1, K'1 relatifs à une batterie B1 sont configurés pour assurer une connexion électrique entre la batterie B1 et une source d'alimentation N-ELEC, GE, SOL ou WND pour recharger la batterie, ou assurer une connexion électrique entre la batterie B1 et un dispositif consommateur pour décharger la batterie, ou déconnecter électriquement la batterie B1 de toute source d'alimentation et de tout dispositif consommateur, pour mettre la batterie au repos.

En effet, deux circuits en parallèle sont relatifs à chaque batterie. Pour la batterie B1 par exemple, le circuit comportant les moyens K1 et D1 en série, appelé circuit de décharge CD, permet le passage d'un courant électrique pour la décharge de la batterie B1, alors que le circuit comportant le moyen K'1, appelé circuit de recharge CR, permet le passage d'un courant électrique pour la recharge de la batterie B1. Lors des phases de décharge, la décharge peut être optimisée en fermant K'1 pour éviter les pertes Joule dans la diode.

Dans ce mode de réalisation, les moyens de connexion K1, K'1, K2 et K'2 sont des interrupteurs de puissance. Ces interrupteurs peuvent être électromécaniques tel qu'un relais ou électroniques tel qu'un transistor MOS.

Les fonctions diodes D1 et D2 peuvent être des diodes passives ou des interrupteurs commandés, par exemple un transistor piloté par un circuit électronique réalisant la même fonction qu'une diode passive.

Lorsque l'interrupteur K1 (respectivement K2) est fermé, la diode D1 (respectivement D2) permet la décharge instantanée de la batterie B1 (respectivement B2) et donc d'obtenir une alimentation sans interruption quand les sources d'alimentation N-ELEC, GE, SOL ou WND ne fournissent plus de courant.

La fermeture de l'interrupteur K'1 (respectivement K'2) permet de mettre en recharge la batterie B1 (respectivement B2), mais aussi lors des phases de décharge d'éliminer par dérivation les pertes Joules et la chute de tension dans la fonction diode D1 (respectivement D2) dues à la tension de seuil de la fonction diode D1 (respectivement D2).

L'ouverture du couple K1 et K1' (respectivement K2 et K2') permet de mettre au repos la batterie B1 (respectivement B2) et d'arrêter toute décharge en dessous d'un seuil critique de tension pour l'électrochimie en dessous duquel il y a risque d'irréversibilité des réactions dans les éléments, notamment par métallisation en dendrite et court-circuit interne avec échauffement et départ de réaction d'oxydation ou combustion incontrôlable.

Le module de couplage DC est configuré pour :

- tant que l'état d'une source d'alimentation est actif,

  -- commander des moyens de connexion K1, K'1 d'une batterie B1 pour fermer son circuit de recharge CR et éventuellement ouvrir son circuit de décharge CD afin de la recharger avec une source d'alimentation N-ELEC, GE, SOL, ou WND jusqu'à un niveau de charge déterminé, si le circuit électrique de décharge CD de la batterie B1 est fermé, ce circuit CD sera court-circuité pendant la recharge de cette batterie B1 ; et

  -- commander des moyens de connexion K2, K'2 de l'autre batterie B2 pour ouvrir ses circuits de recharge CR et de décharge CD afin de la mettre au repos ; le dispositif consommateur étant alimenté avec la source d'alimentation N-ELEC, GE, SOL ou WND ;

- tant que l'état de toutes les sources d'alimentation est inactif,

  -- commander des moyens de connexion K1, K'1 d'une batterie B1 pour ouvrir son circuit de recharge CR et fermer son circuit de décharge CD afin de la décharger jusqu'à un niveau de charge déterminé et alimenter le dispositif consommateur avec cette batterie B1 en décharge; et

  -- commander des moyens de connexion K2, K'2 de l'autre batterie B2 pour ouvrir ses circuits de recharge et de décharge CR et CD afin de la mettre au repos.

Les commandes de recharge et de décharge sont telles que le dispositif consommateur BTS, HOSP, est alimenté sans coupure soit par la source d'alimentation N-ELEC, GE, SOL, ou WND, soit par la décharge d'une dite batterie, B1 ou B2.

A titre d'exemple, selon le mode de réalisation décrit en référence à la figure 5, à l'instant 0, le module de couplage DC commande de fermer les contacteurs K1 et K'1 et d'ouvrir K2 et K'2. La batterie B1 se décharge via le circuit comportant l'interrupteur K'1 sans perte dans la diode D1. La batterie B2 est mise au repos.

À la 5ème heure et demie, la batterie B1 est déchargée, le module de couplage DC commande d'ouvrir K'1, puis le module de contrôle CONT commande de démarrer la source GE. Une fois que la source GE est mise en marche, le module de couplage DC commande de fermer K'2, il n'y a pas un courant qui circule entre les batteries B1 et B2 car l'interrupteur K'1 est ouvert. Ensuite, le module de couplage DC commande d'ouvrir K1, puis de fermer K2. De cette façon, la batterie B2 est en recharge et la batterie B1 est mise au repos.

À la 6ème heure, le module de couplage DC commande d'ouvrir K'2, fermer K'1, puis ouvrir K2.

À la 8ème heure, le module de couplage DC commande d'ouvrir K'1 puis de fermer K'2 et K2.

Dans ce mode de réalisation présenté à la figure 13, les moyens de connexion K1, K'1, K2, K'2, D1 et D2 sont compris dans le dispositif de commande DP. Dans un autre mode, ces moyens sont compris dans un autre dispositif ou un autre boitier que le dispositif de commande DP, mais sont commandés par le module de couplage DC du dispositif de commande DP.

Les circuits de recharge et de décharge d'une batterie peuvent être commandés indépendamment l'un de l'autre. L'indépendance des circuits de charge et décharge permet d'introduire une certaine redondance. Par exemple la décharge de la batterie B1 peut intervenir soit en fermant l'interrupteur K1, soit en fermant l'interrupteur K'1.

Le module de contrôle CONT est configuré pour contrôler l'état d'activité d'une source d'alimentation, par exemple de type groupe électrogène GE.

Le module de communication COM est configuré pour obtenir au moins une information mes1 (resp. mes 2) représentative d'un niveau de charge d'une batterie B1 (resp. B2), pour déterminer, en fonction de cette information mes1 (ou mes2), quelle batterie parmi B1 et B2 à recharger ou à décharger.

Le niveau de charge SoC (pour « State of Charge » en anglais) d'une batterie peut être exprimé en pourcentage par le rapport entre la charge disponible Q dans la batterie et la capacité Cmax maximale de cette batterie.

La charge Q et le niveau de charge SoC peuvent être déterminés à partir de la tension de la batterie si elle reflète l'état de charge.

La tension est haute en fin de charge, par exemple supérieure à 3,45V x k pour des batteries au Lithium Fer Phosphate (LFP), k étant le nombre d'éléments en série pour constituer la batterie.

La tension est basse en fin de décharge, par exemple inférieure 3 V x k pour ces types de batteries.

Pour certaines technologies de batteries, la tension n'est pas un indicateur suffisamment précis pour les états de charge intermédiaires et on peut compléter cette mesure par un compteur cumulant la charge Q à un instant donné, cette charge Q étant supposée contenue dans la batterie et bornée entre 0 et la valeur maximum de capacité Cmax.

Le calcul de la charge Q utilise au moins des mesures de courant et de temps, voire d'autres mesures comme la température et d'autres informations mémorisées comme des données de références du constructeur ou des données historiques acquises pendant l'utilisation de la batterie.

Dans un mode de réalisation, la charge Q à un instant t+dt est exprimée par :

$$Q(t+dt)= Q(t)+r.I.dt \ ;$$

où

- I est l'intensité du courant de charge (positif par convention) ou de décharge (négatif par convention) dans la batterie mesurée par des moyens connus de l'art antérieur du domaine de l'électronique, tels que la tension sur un shunt ou le capteur à effet Hall, et utilisés par l'unité de contrôle/commande ;
- dt est un intervalle de temps de mesure avec un courant supposé constant ou bien lissé sur cet intervalle par moyenne simple ou par calcul de valeur efficace, en utilisant par exemple une méthode de calcul de type RMS (pour « Root Mean Square » en anglais) ;
- r est le rendement estimé; ce rendement r peut avoir une valeur constante, par exemple 95%, ou être variable ; ce rendement r peut dépendre de nombreux paramètres, tels que :

  un état de la batterie en décharge ou en charge, selon le sens du courant dans la batterie ;

  un état de charge, par exemple le rendement de charge peut s'effondre en fin de la charge ;

  une température de la batterie, par exemple un rendement plus faible à froid ;

  un régime de charge ou de décharge, par exemple un ratio entre le courant et la capacité nominale Cnom tel que I= Cnom /3 et le rendement est plus faible à fort régime ;

  un état de santé de la batterie décrite par la performance résiduelle en capacité et puissance ou résistance interne.

L'état de santé est affecté par l'âge de la batterie appelé aussi le vieillissement calendaire, l'historique des cycles, la température, le temps passé à différentes profondeurs de décharge, le courant de charge, les éventuels abus subis (surcharge, sous-décharge, court-circuit), le mauvais entretien, etc.

Le niveau de charge peut être exprimé par :

$$Q = C_{max} \cdot \max\left(\min\left(0\%, Q(t+dt)\right), 100\%\right)$$

où $C_{max}$ vaut par exemple 90 % de la capacité nominale $C_{nom}$ définie à un régime de courant d'échange et une température donnée entre la fin de recharge et la fin de décharge définie par le fabriquant, par exemple 100 Ah à 25°C après une recharge à 30 A de batterie jusqu'à 3,55V x k plus une heure à cette tension constante et jusqu'à 2,85V x k en décharge à 30 A.

Dans un mode de réalisation, pour une meilleure précision du calcul, la valeur maximale est corrigée, par exemple en fonction de la capacité nominale de la batterie, ou en fonction de l'état de santé, ou de la température.

Dans un mode de réalisation, les mesures de niveaux de charge d'une batterie peuvent être acquises préalablement par une entité BMS associée à cette batterie.

Dans un mode de réalisation, les informations mes1 ou mes2 sont récupérées via une liaison de communication, par exemple une liaison de type analogique, modbus, CAN, FIP, Ethernet ou d'un autre type.

Dans un mode de réalisation, au moins une batterie B1 est en Lithium. Les deux circuits en parallèle, de recharge et de décharge, comprenant les moyens K1, K'1 et D1 relatifs à cette batterie B1 sont compris dans l'entité électronique de gestion BMS associée à la batterie B1.

Dans les modes de réalisation décrits ici, le dispositif de commande DP conforme à l'invention a l'architecture d'un ordinateur, telle qu'illustrée à la figure 14. Elle comprend notamment un processeur 7, une mémoire vive 8, une mémoire morte 9, une mémoire flash non volatile 10 dans un mode particulier de réalisation de l'invention, ainsi que des moyens de communication 11. De tels moyens sont connus en soi et ne sont pas décrits plus en détail ici.

La mémoire morte 9 du dispositif de commande DP selon l'invention constitue un support d'enregistrement conforme à l'invention, lisible par le processeur 7 et sur lequel est enregistré un programme d'ordinateur Prog conforme à l'invention.

La mémoire 10 du dispositif de commande DP permet d'enregistrer des variables utilisées pour l'exécution des étapes de l'invention, telles que les données mes1, mes2, mes3 représentatives des niveaux de charge des batteries, les informations info-disp représentatives des états d'activité des sources d'alimentation, une valeur d'un compteur à rebours temporel TIMER utilisé pour estimer un niveau de charge d'une batterie.

Le programme d'ordinateur Prog définit des modules fonctionnels et logiciels, configurés pour piloter des batteries. Ces modules fonctionnels s'appuient sur et/ou commandent les éléments matériels 7-11 du dispositif de commande DP cités précédemment.

**Revendications**

1. Procédé de commande de recharge et de décharge de batteries (B1, B2) d'un ensemble (E) desdites batteries (B1, B2), chacune des batteries étant reliée à un circuit électrique reliant une source d'alimentation à un dispositif consommateur pour former :

   -- un circuit électrique commandable (CR) dit de recharge reliant ladite batterie à ladite source d'alimentation (N-ELEC, GE, SOL, WND); et
   -- un circuit électrique commandable (CD) dit de décharge reliant ladite batterie audit dispositif consommateur (BTS, HOSP) et réalisant une fonction diode pour éviter un courant de circulation entre les batteries,

   ledit procédé comprenant au moins:

   - une recharge (E104) d'une dite première batterie (B1) dudit ensemble (E), simultanée avec une mise au repos (E106) d'au moins une autre batterie dudit ensemble (E), dite deuxième batterie (B2), ladite recharge (E104) de ladite première batterie (B1) étant suivie par une dite mise au repos (E110) de ladite première batterie (B1); ou
   - une décharge (E116) d'une dite première batterie (B1) dudit ensemble (E), simultanée avec une mise au repos (E118) d'au moins une autre batterie dudit ensemble (E), dite deuxième batterie (B2), ladite décharge (E116) de ladite première batterie (B1) étant suivie par une dite mise au repos (E122) de ladite première batterie (B1), et en ce que, dans ledit procédé :
   - une dite recharge de n'importe laquelle desdites batteries consiste à commander une fermeture dudit circuit électrique de recharge correspondant à ladite batterie pour la recharge de ladite batterie par ladite source d'alimentation ;
   - une dite décharge de n'importe laquelle desdites batteries consiste à commander une ouverture dudit circuit électrique de recharge et à commander une fermeture dudit circuit électrique de décharge correspondants à ladite batterie pour la décharge de ladite batterie pour alimenter le dispositif consommateur ;

- une dite mise au repos de n'importe laquelle desdites batteries consiste à commander une ouverture desdits circuits électriques de recharge et de décharge correspondants à ladite batterie pour la mise au repos de ladite batterie ;

ledit dispositif consommateur (BTS, HOSP) étant alimenté soit par ladite source d'alimentation (N-ELEC, GE, SOL, WND), soit par la décharge d'une dite batterie.

2. Procédé de commande selon la revendication 1 comprenant en outre, pour au moins une batterie dudit ensemble (E), une séquence cyclique comportant :

   - au moins une dite recharge suivie d'une dite mise au repos ; et
   - au moins une dite décharge suivie d'une dite mise au repos.

3. Procédé de commande selon l'une des revendications 1 ou 2 comprenant en outre, de manière alternée entre au moins deux desdites batteries dudit ensemble (E), une séquence comportant :

   - au moins une dite recharge suivie d'une dite mise au repos ; et
   - au moins une dite décharge suivie d'une dite mise au repos ;
   les durées desdites recharge, décharge et mises au repos de ladite séquence pouvant être différentes pour chacune desdites batteries.

4. Procédé de commande selon l'une des revendications 1 à 3 comprenant une étape (E102, E114) de surveillance d'une information (info-disp) représentative d'un état d'activité de ladite source d'alimentation (N-ELEC, GE, SOL, WND), ledit procédé étant **caractérisé en ce que** :

   - tant que ledit état de ladite source d'alimentation est actif, ladite recharge (E104) de ladite première batterie (B1) est mise en œuvre jusqu'à un niveau de charge déterminé, ledit dispositif consommateur (BTS, HOSP) étant alimenté par ladite source d'alimentation (N-ELEC, GE, SOL, WND) ; et
   - tant que ledit état de ladite source d'alimentation est inactif, ladite décharge (E116) de ladite première batterie (B1) est mise en œuvre jusqu'à un niveau de charge déterminé.

5. Procédé de commande selon l'une des revendications 1 à 4 comportant en outre une étape d'obtention (E108, E120) d'au moins une information (mes1) représentative d'un état de charge d'une dite batterie (B1) pour déterminer la batterie (B2) en recharge (E112) ou en décharge (E124).

6. Procédé de commande selon l'une des revendications 4 à 5 comportant en outre une étape de contrôle (E128) de ladite source d'alimentation (GE) pour la mettre dans l'état actif ou dans l'état inactif, ladite information (info-disp) représentative de l'état d'activité de ladite source d'alimentation (GE) étant fournie par ladite étape de contrôle.

7. Procédé de commande selon la revendication 6 dans lequel une durée d'activité et une durée d'inactivité de ladite source d'alimentation (GE) sont déterminées.

8. Procédé de commande selon les revendications 5 et 6 dans lequel une durée d'activité et une durée d'inactivité de ladite source d'alimentation (GE) sont déterminées en fonction de ladite au moins une information (mes1, mes2) représentative de l'état de charge d'une dite batterie (B1, B2).

9. Programme d'ordinateur (Prog) comportant des instructions pour l'exécution d'un procédé de commande selon l'une des revendications 1 à 8 lorsque ledit programme est exécuté par un ordinateur.

10. Support d'enregistrement lisible par un ordinateur sur lequel est enregistré le programme d'ordinateur (Prog) selon la revendication 9.

11. Dispositif (DP) de commande de recharge et de décharge de batteries (B1, B2) d'un ensemble (E) desdites batteries (B1, B2), chacune desdites batteries étant destinée à être reliée à un circuit électrique reliant une source d'alimentation à un dispositif consommateur pour former :

    - un circuit électrique commandable dit de recharge reliant ladite batterie à ladite source d'alimentation (N-ELEC, GE, SOL, WND) ; et
    - un circuit électrique commandable dit de décharge reliant ladite batterie audit dispositif consommateur (BTS, HOSP) et réalisant une fonction diode pour éviter un courant de circulation entre les batteries,
    ledit dispositif de commande (DP) comportant un module de couplage (DC) configuré pour générer au moins :
    - une commande de recharge d'une dite première batterie (B1) dudit ensemble (E), simultanée avec une mise au repos d'au moins une autre batterie (B2) dudit ensemble (E) dite deuxième batterie (B2), ladite recharge de ladite première batterie (B1) étant suivie par une mise au repos de ladite première batterie (B1) ; ou
    - une commande de décharge d'une dite première batterie (B1) dudit ensemble (E), simultanée avec une mise au repos d'au moins une autre batterie (B2) dudit ensemble (E) dite deuxième batterie (B2), ladite décharge de ladite première batterie (B1) étant suivie par une dite mise au repos de ladite première batterie (B1) ;

ledit module de couplage étant configuré pour générer lesdites commandes de recharge et lesdites commandes de décharge pour que ledit dispositif consommateur (BTS, HOSP) soit alimenté soit par ladite source d'alimentation (N-ELEC, GE, SOL, WND), soit par la décharge d'une dite batterie,

une dite recharge de n'importe laquelle desdites batteries consistant à commander une fermeture dudit circuit électrique de recharge correspondant à ladite batterie pour la recharge de ladite batterie par ladite source d'alimentation ;

une dite décharge de n'importe laquelle desdites batteries consistant à commander une ouverture dudit circuit électrique de recharge et à commander une fermeture dudit circuit électrique de décharge correspondants à ladite batterie pour la décharge de ladite batterie pour alimenter le dispositif consommateur ;

une dite mise au repos de n'importe laquelle desdites batteries consistant à commander une ouverture desdits circuits électriques de recharge et de décharge correspondants à ladite batterie pour la mise au repos de ladite batterie.

12. Dispositif de commande (DP) selon la revendication 11 comportant :

   - un module de surveillance (SURV) configuré pour surveiller une information (info-disp) représentative d'un état d'activité de ladite source d'alimentation ;
   - ledit module de couplage (PROC) étant configuré pour :

      -- tant que ledit état de ladite source d'alimentation est actif, commander lesdits circuits électriques (K1, K'1) correspondants à ladite première batterie (B1) et lesdits circuits électriques (K2, K'2, K3, K'3) correspondants à la dite deuxième batterie (B2, B3) pour ladite recharge de ladite première batterie (B1) jusqu'à un niveau de charge déterminé; et

      -- tant que ledit état de ladite source d'alimentation est inactif, commander lesdits circuits électriques (K1, K'1) correspondants à ladite première batterie (B1) et lesdits circuits électriques (K2, K'2, K3, K'3) correspondants à la dite deuxième batterie (B2, B3) pour ladite décharge de ladite première batterie (B1) jusqu'à un niveau de charge déterminé.

13. Dispositif (DP) de commande selon l'une des revendications 11 ou 12 comportant en outre un module de communication (COM) configuré pour obtenir au moins une information (mes1, mes 2) représentative d'un état de charge d'une dite batterie, pour déterminer ladite batterie à recharger ou à décharger.

14. Dispositif (DP) de commande selon l'une des revendications 11 à 13 comportant en outre un module de contrôle (CONT) configuré pour contrôler ledit état d'activité de ladite source d'alimentation (GE), ledit module de surveillance (COM2) étant configuré pour obtenir l'information (info-disp) représentative de l'état d'activité de ladite source d'alimentation (GE) dudit module de contrôle (CONT).

15. Système de commande de recharge et de décharge de batteries d'un ensemble desdites batteries (B1, B2, B3), chacune desdites batteries étant reliée à un circuit électrique reliant une source d'alimentation à un dispositif consommateur pour former un circuit électrique commandable dit de recharge reliant ladite batterie à ladite source d'alimentation (N-ELEC, GE, SOL, WND), et un circuit électrique commandable dit de décharge reliant ladite batterie audit un dispositif consommateur (BTS, HOSP), ledit système comportant:

   - un dispositif de commande (DP) dudit ensemble selon l'une des revendications 11 à 14 ;
   - ladite source d'alimentation ; et
   - ledit dispositif consommateur.

16. Système de commande selon la revendication 15 dans lequel ladite source d'alimentation est une source parmi un générateur électrique (N-ELEC), un groupe électrogène (GE), un panneau solaire (SOL) et une éolienne (WND).

17. Système de commande selon l'une des revendications 15 ou 16 dans lequel ledit dispositif consommateur est un dispositif parmi une station de base de communications sans fil (BTS) et un dispositif médical (HOSP).

[Fig. 1]

[Fig. 2]

E200 — init i

E202 — Surveillance info-disp

E203 — Timer

Bcl

Info-disp ? — non / oui

E204 — Bi UP

E206 — (E\Bi) PAUSE

E208 — MESi = NR$_{MIN}$? — oui / non

E210

i = n ? — oui / non

i — 1

i++

i

E216 — Bi DOWN

E218 — (E\Bi) PAUSE

E220 — MESi = ND$_{MIN}$? — oui / non

[Fig. 3]

[Fig. 4]

[Fig. 5]

[Fig. 6]

t(h)

[Fig. 8]

t(h)

[Fig. 7]

[Fig. 9]

t(h)

[Fig. 10]

t(h)

[Fig. 11]

[Fig. 12]

RX Info-disp OK de N-ELEC — E102

B1-UP — E104  B2-PAUSE — E106

RX mes1 OK — E108

B1-PAUSE — E110  B2-UP — E112

RX Info-disp NO de N-ELEC — E114

B1-DOWN — E116  B2-PAUSE — E118

RX mes1 NO — E120

B1-PAUSE — E122  B2-DOWN — E124

RX mes2 NO — E126

TX Set-ON à GE — E128

B1-UP — E130  B2-PAUSE — E132

[Fig. 13]

[Fig. 14]

Europäisches
Patentamt

European
Patent Office

Office européen
des brevets

# RAPPORT DE RECHERCHE EUROPEENNE

Numéro de la demande

EP 19 21 7597

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2017/285109 A1 (KAWAMURA MASAYUKI [JP] ET AL) 5 octobre 2017 (2017-10-05) * alinéas [0003], [0025] - [0027], [0036], [0041], [0042], [0045] - [0053], [0056] * * figure toutes * | 1-17 | INV. H02J9/06 H02J7/00 H02J7/14 H02J7/34 |
| X | US 2018/248376 A1 (TERAMOTO YUICHIRO [JP] ET AL) 30 août 2018 (2018-08-30) * alinéas [0008], [0031], [0074] * * figure toutes * | 1-17 | |
| A | US 2013/221896 A1 (DONG GUANGYU [CN]) 29 août 2013 (2013-08-29) * figure toutes * | 1-17 | |
| A | US 2012/235624 A1 (SISK BRIAN C [US] ET AL) 20 septembre 2012 (2012-09-20) * figure 6 * | 1-17 | |

DOMAINES TECHNIQUES RECHERCHES (IPC)

H02J

Le présent rapport a été établi pour toutes les revendications

| Lieu de la recherche | Date d'achèvement de la recherche | Examinateur |
|---|---|---|
| Munich | 11 février 2020 | Bartal, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 21 7597

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-02-2020

| Document brevet cité au rapport de recherche | | | Date de publication | Membre(s) de la famille de brevet(s) | | | Date de publication |
|---|---|---|---|---|---|---|---|
| US | 2017285109 | A1 | 05-10-2017 | JP | 5980457 | B1 | 31-08-2016 |
| | | | | JP | 2017181325 | A | 05-10-2017 |
| | | | | US | 2017285109 | A1 | 05-10-2017 |
| US | 2018248376 | A1 | 30-08-2018 | AU | 2016344885 | A1 | 10-05-2018 |
| | | | | EP | 3370322 | A1 | 05-09-2018 |
| | | | | JP | 2017085769 | A | 18-05-2017 |
| | | | | US | 2018248376 | A1 | 30-08-2018 |
| | | | | WO | 2017072991 | A1 | 04-05-2017 |
| US | 2013221896 | A1 | 29-08-2013 | CN | 102593907 | A | 18-07-2012 |
| | | | | US | 2013221896 | A1 | 29-08-2013 |
| | | | | US | 2014084692 | A1 | 27-03-2014 |
| | | | | WO | 2013127150 | A1 | 06-09-2013 |
| US | 2012235624 | A1 | 20-09-2012 | CN | 103534133 | A | 22-01-2014 |
| | | | | CN | 103534134 | A | 22-01-2014 |
| | | | | CN | 103534135 | A | 22-01-2014 |
| | | | | CN | 103547475 | A | 29-01-2014 |
| | | | | CN | 103687749 | A | 26-03-2014 |
| | | | | EP | 2686195 | A1 | 22-01-2014 |
| | | | | EP | 2686196 | A2 | 22-01-2014 |
| | | | | EP | 2686197 | A2 | 22-01-2014 |
| | | | | EP | 2686198 | A1 | 22-01-2014 |
| | | | | EP | 2686199 | A2 | 22-01-2014 |
| | | | | US | 2012235473 | A1 | 20-09-2012 |
| | | | | US | 2012235511 | A1 | 20-09-2012 |
| | | | | US | 2012235624 | A1 | 20-09-2012 |
| | | | | US | 2012235642 | A1 | 20-09-2012 |
| | | | | US | 2012237799 | A1 | 20-09-2012 |
| | | | | US | 2016176298 | A1 | 23-06-2016 |
| | | | | WO | 2012125954 | A2 | 20-09-2012 |
| | | | | WO | 2012125956 | A1 | 20-09-2012 |
| | | | | WO | 2012125963 | A2 | 20-09-2012 |
| | | | | WO | 2012125968 | A1 | 20-09-2012 |
| | | | | WO | 2012125971 | A2 | 20-09-2012 |

EPO FORM P0460

Pour tout renseignement concernant cette annexe : voir Journal Officiel de l'Office européen des brevets, No.12/82